# EUROPEAN PATENT APPLICATION

(11) **EP 4 523 820 A1**
(43) Date of publication of application: **19.03.2025**
(21) Application number: 22964410.9
(22) Date of filing: 02.11.2022
(51) Int. Cl.: B23B 25/06, B23Q 17/00

(54) **TURRET LATHE, AND TOOL PREPARATION METHOD**

(71) Applicant: Yamazaki Mazak Corporation, Niwa-gun, Aichi 480-0197 (JP)
(72) Inventor: YAMAMOTO, Mikihito, Niwa-gun, Aichi 480-0197 (JP); HIKOSAKA, Taichi, Niwa-gun, Aichi 480-0197 (JP); KAKAMU, Tatsuya, Niwa-gun, Aichi 480-0197 (JP); KOIKE, Shunsuke, Niwa-gun, Aichi 480-0197 (JP); SUMIDA, Yasuharu, Niwa-gun, Aichi 480-0197 (JP)
(74) Representative: TBK
(86) International application number: PCT/JP2022/040974
(87) International publication number: WO 2024/095390

(57) **Abstract**

The controller of a turret lathe performs a first determination processing of determining whether or not a designated tool is attached to a designated mounting surface that is one of the plurality of mounting surfaces of the turret, and selects a specific operation pattern from a plurality of operation patterns based on the result of the first determination processing. The plurality of operation patterns includes at least a first operation pattern to be executed when the designated tool is not attached to the designated mounting surface, and a second operation pattern to be executed when the designated tool is attached to the designated mounting surface. The first operation pattern includes rotating the turret about a first axis for the designated mounting surface to be brought to an indexed mounting position before the designated tool is attached to the designated mounting surface. The second operation pattern includes rotating the turret about the first axis for the designated mounting surface with the designated tool mounted thereon to be directly brought to an indexed position for tool nose position measurement.

## Description

### Technical Field

The present invention relates to a turret lathe and a tool preparation method.

### Background Art

Techniques for measuring the positions of noses and registering the measurement results in an NC machine tool are known.

Patent Literature 1 discloses a related technique, which is a method of setting tool correction values in a machine tool. According to the setting method described in Patent Literature 1, the operation sequence for automatically setting tool correction values is registered in a controller for each tool set. In Patent Literature 1, tool sets refer to combinations of various types of tool holders and various types of tools. According to the setting method described in Patent Literature 1, when a tool set attached to the tool head is specified, the tool correction values are automatically set for each of the tools included in the tool set in accordance with the above-mentioned operation sequence.

### Citation List

### Patent Literature

PTL1: JP 2015-9345 A.

### Summary of Invention

### Technical Problem

An object of the present invention is to provide a turret lathe and a tool preparation method that allow efficient execution of a procedure including measurement of a nose position.

### Solution to Problem

The turret lathe according to some embodiments includes: a turret that has a plurality of mounting surfaces; a rotation drive unit that rotates the turret about a first axis; a moving unit that moves the turret; a measurement unit that measures a position of a tool nose; and a controller configured to execute a first determination processing of determining whether or not a designated tool is attached to a designated mounting surface that is one of the plurality of mounting surfaces, to select a specific operation pattern from a plurality of operation patterns based on a result of the first determination processing, and to send a control command to the rotation drive unit and the moving unit so that the selected operation pattern is executed. The plurality of operation patterns includes at least a first operation pattern to be executed when the result of the first determination processing indicates that the designated tool is not attached to the designated mounting surface, and a second operation pattern to be executed when the result of the first determination processing indicates that the designated tool is attached to the designated mounting surface. The first operation pattern includes: rotating the turret about the first axis for the designated mounting surface to be brought to an indexed mounting position before the designated tool is attached to the designated mounting surface; rotating the turret about the first axis for the designated mounting surface to be brought to an indexed position for tool nose position measurement after the designated tool has been attached to the designated mounting surface; and measuring the nose position of the designated tool using the measurement unit. The second operation pattern includes rotating the turret about the first axis for the designated mounting surface with the designated tool mounted thereon to be directly brought to the indexed position for tool nose position measurement, and measuring the nose position of the designated tool using the measurement unit.

The tool preparation method according to some embodiments includes: executing, by a controller, a first determination processing of determining whether or not a designated tool is attached to a designated mounting surface that is one of a plurality of mounting surfaces of a turret; selecting, by the controller, a specific operation pattern from among a plurality of operation patterns based on a result of the first determination processing; and sending, by the controller, a control command to a rotation drive unit configured to rotate the turret about a first axis, and to the moving unit configured to move the turret, so that the selected specific operation pattern is executed. The plurality of operation patterns includes at least a first operation pattern to be executed when the result of the first determination processing indicates that the designated tool is not attached to the designated mounting surface, and a second operation pattern to be executed when the result of the first determination processing indicates that the designated tool is attached to the designated mounting surface. The first operation pattern includes: rotating the turret about the first axis for the designated mounting surface to be brought to an indexed mounting position before the designated tool is attached to the designated mounting surface; rotating the turret about the first axis for the designated mounting surface to be brought to an indexed position for tool nose position measurement after the designated tool has been attached to the designated mounting surface; and measuring the nose position of the designated tool using the measurement unit. The second operation pattern includes rotating the turret about the first axis for the designated mounting surface with the designated tool mounted thereon to be directly brought to the indexed position for tool nose position measurement, and measuring the nose position of the designated tool using the measurement unit.

### Effects of Invention

The present invention can provide a turret lathe and a tool preparation method that allow efficient execution of a procedure including measurement of a nose position.

### Brief Description of Drawings

**[****FIG.** 1] FIG. 1 is a schematic perspective diagram illustrating a turret lathe in a first embodiment.
[FIG. 2] FIG. 2 is a block diagram illustrating a hardware configuration example of a controller.
[FIG. 3] FIG. 3 is a flowchart showing one example of a tool preparation method in the first embodiment.
[FIG. 4] FIG. 4 is a schematic cross-sectional diagram illustrating one part of the turret lathe in the first embodiment.
[FIG. 5] FIG. 5 is a schematic cross-sectional diagram illustrating one part of the turret lathe in the first embodiment.
[FIG. 6] FIG. 6 is a diagram illustrating an image shown on a display, prompting to mount a designated tool.
[FIG. 7] FIG. 7 is a schematic cross-sectional diagram illustrating one part of the turret lathe in the first embodiment.
[FIG. 8] FIG. 8 is a schematic cross-sectional diagram illustrating one part of the turret lathe in the first embodiment.
[FIG. 9] FIG. 9 is a schematic cross-sectional diagram illustrating one part of the turret lathe in the first embodiment.
[FIG. 10] FIG. 10 is a schematic cross-sectional diagram illustrating one part of the turret lathe in the first embodiment.
[FIG. 11] FIG. 11 is a schematic cross-sectional diagram illustrating one part of the turret lathe in the first embodiment.
[FIG. 12] FIG. 12 is a schematic cross-sectional diagram illustrating one part of the turret lathe in the first embodiment.
[FIG. 13] FIG. 13 is a schematic cross-sectional diagram illustrating one part of the turret lathe in the first embodiment.
[FIG. 14] FIG. 14 is a schematic cross-sectional diagram illustrating one part of the turret lathe in the first embodiment.
[FIG. 15] FIG. 15 is a flowchart showing one example of the tool preparation method in the first embodiment.
[FIG. 16] FIG. 16 is a schematic cross-sectional diagram illustrating one part of the turret lathe in the first embodiment.
[FIG. 17] FIG. 17 is a schematic cross-sectional diagram illustrating one part of the turret lathe in the first embodiment.
[FIG. 18] FIG. 18 is a schematic cross-sectional diagram illustrating one part of the turret lathe in the first embodiment.
[FIG. 19] FIG. 19 is a schematic cross-sectional diagram illustrating one part of the turret lathe in the first embodiment.
[FIG. 20] FIG. 20 is a schematic cross-sectional diagram illustrating one part of the turret lathe in the first embodiment.
[FIG. 21] FIG. 21 is a flowchart showing one example of the tool preparation method in the first embodiment.
[FIG. 22] FIG. 22 is a schematic cross-sectional diagram illustrating one part of the turret lathe in the first embodiment.
[FIG. 23] FIG. 23 is a flowchart showing one example of the tool preparation method in the first embodiment.
[FIG. 24] FIG. 24 is a flowchart showing one example of the tool preparation method in the first embodiment.
[FIG. 25] FIG. 25 is a diagram illustrating how a fourth operation pattern is made selectable.
[FIG. 26] FIG. 26 is a diagram illustrating how a nose position is measured.
[FIG. 27] FIG. 27 is a schematic perspective diagram illustrating a turret lathe in a second embodiment.
[FIG. 28] FIG. 28 is a block diagram illustrating a hardware configuration example of the controller.
[FIG. 29] FIG. 29 is a diagram illustrating one example of first data stored in a memory.
[FIG. 30] FIG. 30 is a diagram illustrating one example of second data stored in the memory.
[FIG. 31] FIG. 31 is a diagram illustrating one example of third data stored in the memory.
[FIG. 32] FIG. 32 is a diagram illustrating a first image shown on the display.
[FIG. 33] FIG. 33 is a diagram illustrating the first image shown on the display.
[FIG. 34] FIG. 34 is a diagram illustrating the first image shown on the display.
[FIG. 35] FIG. 35 is a diagram illustrating the first image shown on the display.
[FIG. 36] FIG. 36 is a diagram illustrating one example of an outer look of the controller.
[FIG. 37] FIG. 37 is a schematic cross-sectional diagram illustrating one part of the turret lathe in the second embodiment.
[FIG. 38] FIG. 38 is a diagram illustrating a second image shown on the display.
[FIG. 39] FIG. 39 is a diagram illustrating the second image shown on the display.
[FIG. 40] FIG. 40 is a diagram illustrating the second image shown on the display.
[FIG. 41] FIG. 41 is a diagram illustrating a measurement macro shown on the display.
[FIG. 42] FIG. 42 is a diagram illustrating the measurement macro shown on the display.
[FIG. 43] FIG. 43 is a flowchart showing one example of the tool preparation method in the second embodiment.
[FIG. 44] FIG. 44 is a flowchart showing one example of the tool preparation method in the second embodiment.

### Description of Embodiments

Hereinafter, a turret lathe 1 and a tool preparation method according to one embodiment will be described with reference to the drawings. In the following description of the embodiment, parts and components that have identical functions are given the same reference numerals, and repetitive descriptions of these parts and components with the same reference numerals will be omitted.

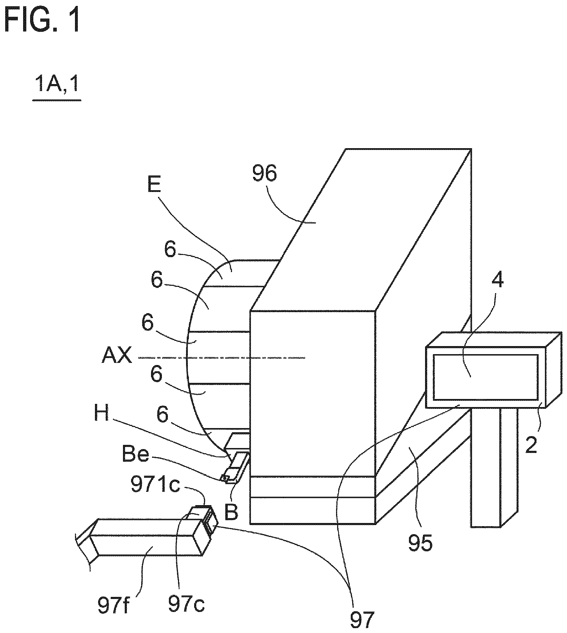

As illustrated in FIG. 1, a tool B is usually attached to a mounting surface 6 of the turret E via a tool holding unit H (e.g., tool holder). It follows that mounting the tool on the turret herein shall include mounting the tool on the turret via the tool holding unit.

A tool is herein defined as a designated tool when it is predetermined on which of the plurality of mounting surfaces of the turret E the tool is to be mounted. The tools are designated based on a machining program, for example.

One of the plurality of mounting surfaces 6 of the turret E on which the designated tool is to be mounted is herein defined as a designated mounting surface. More specifically, one of the plurality of mounting surfaces 6 of the turret E on which a first designated tool is to be mounted is herein defined as a first designated mounting surface. Where "K" represents any natural number equal to or greater than 2, one of the plurality of mounting surfaces 6 of the turret E on which a "K-th" designated tool is to be mounted is herein defined as a "K-th" designated mounting surface.

A tool that is not required in a next machining processing is herein defined as a non-designated tool 5'.

### (First embodiment)

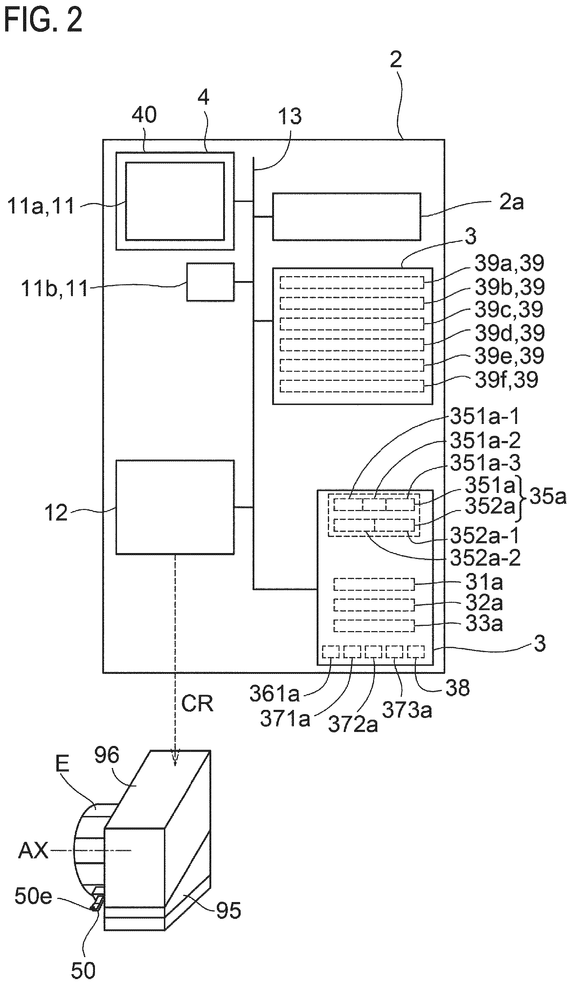

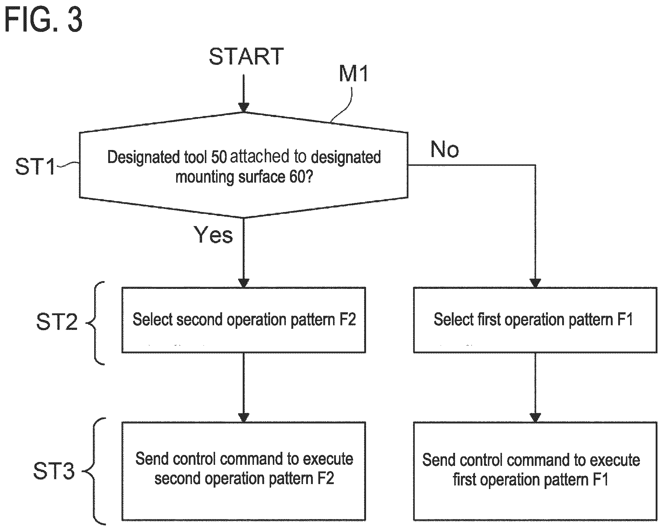

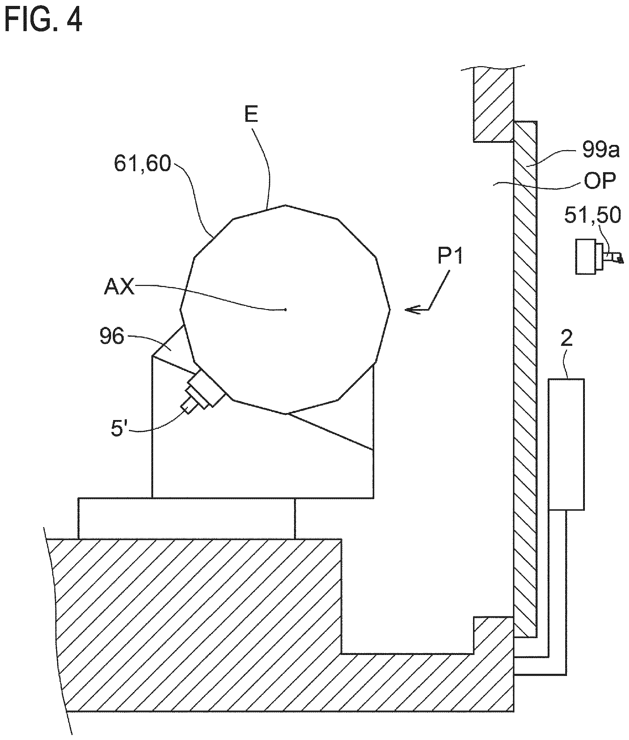

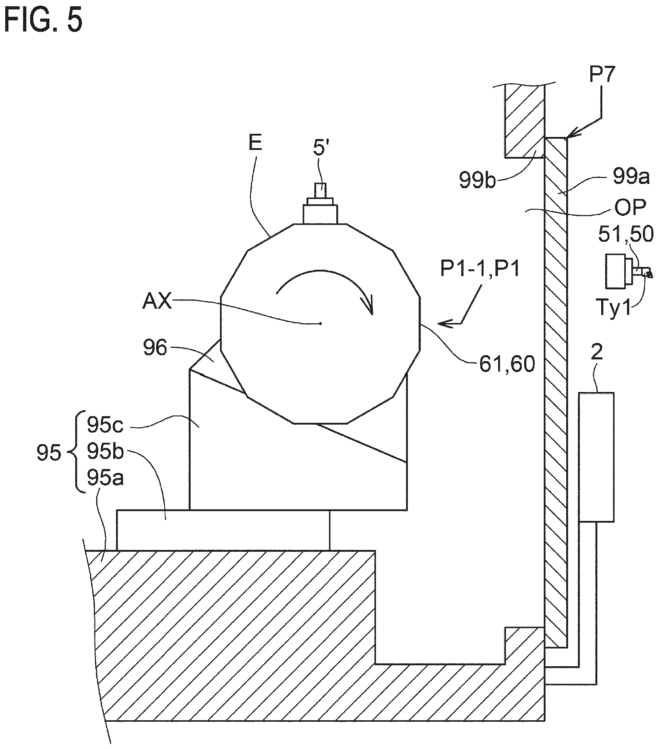

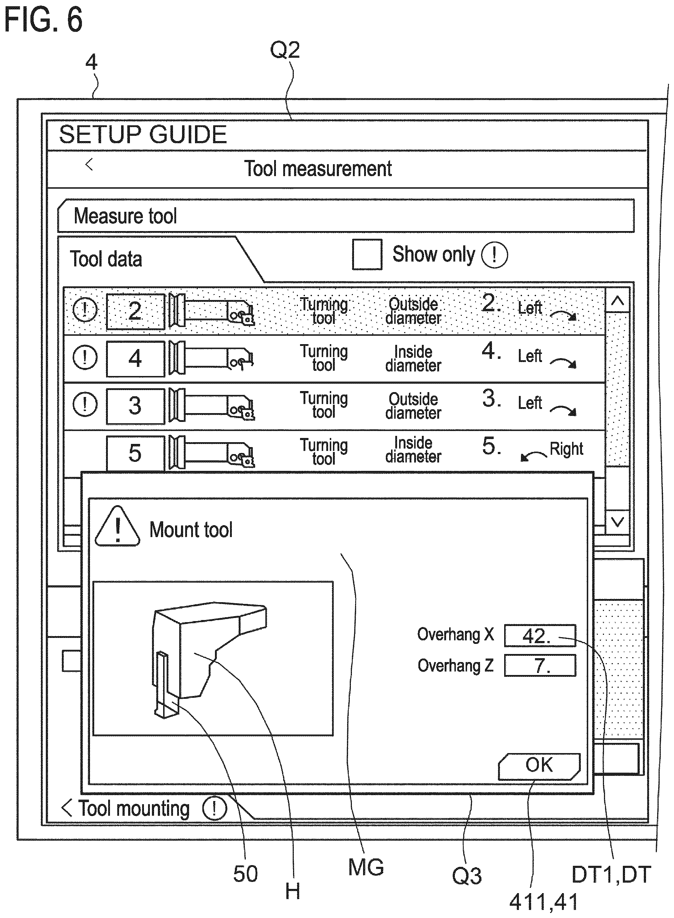

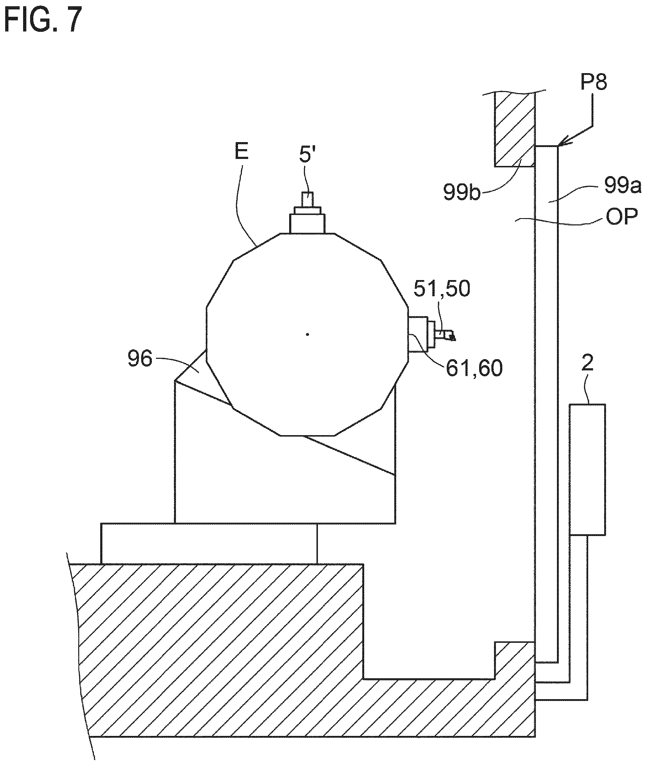

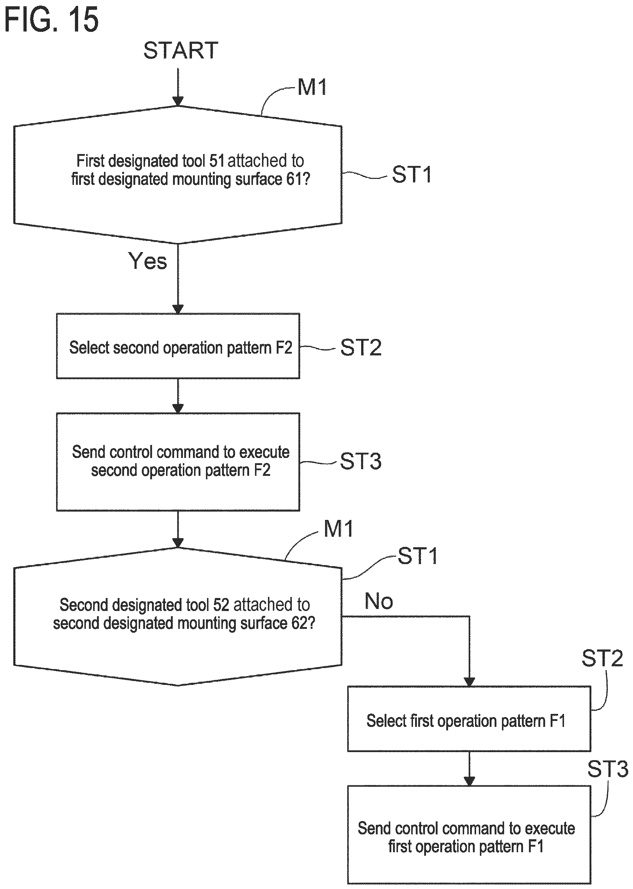

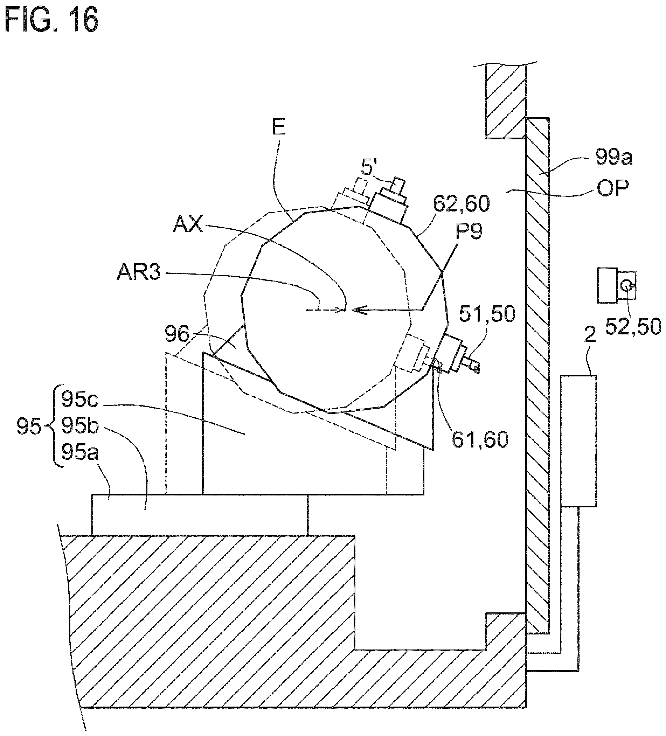

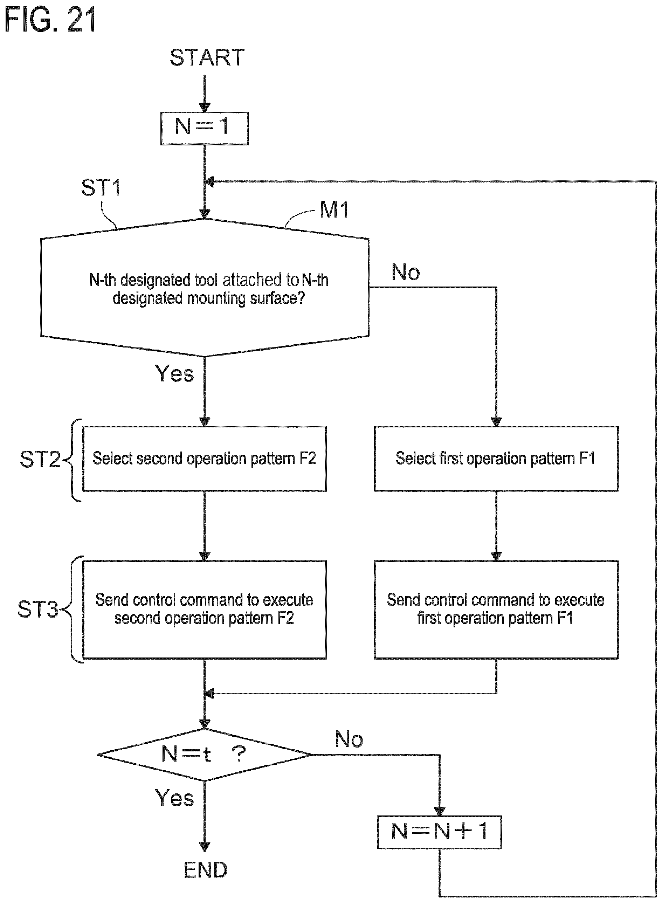

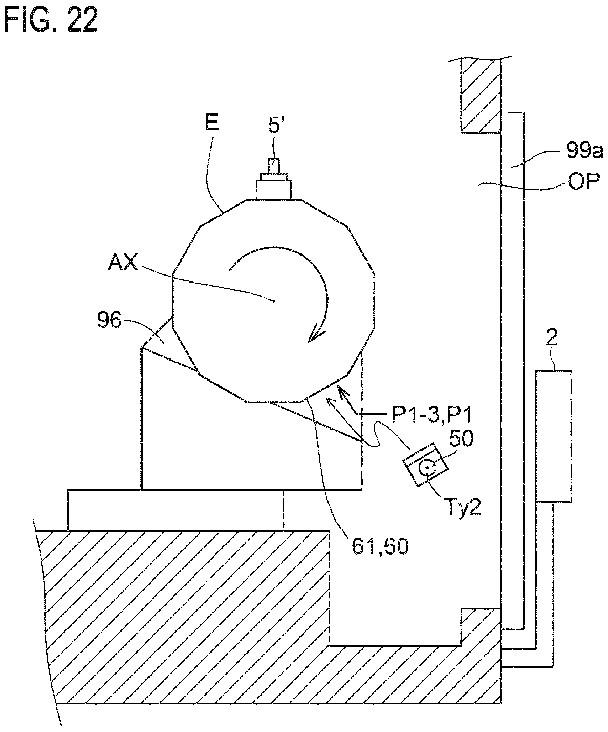

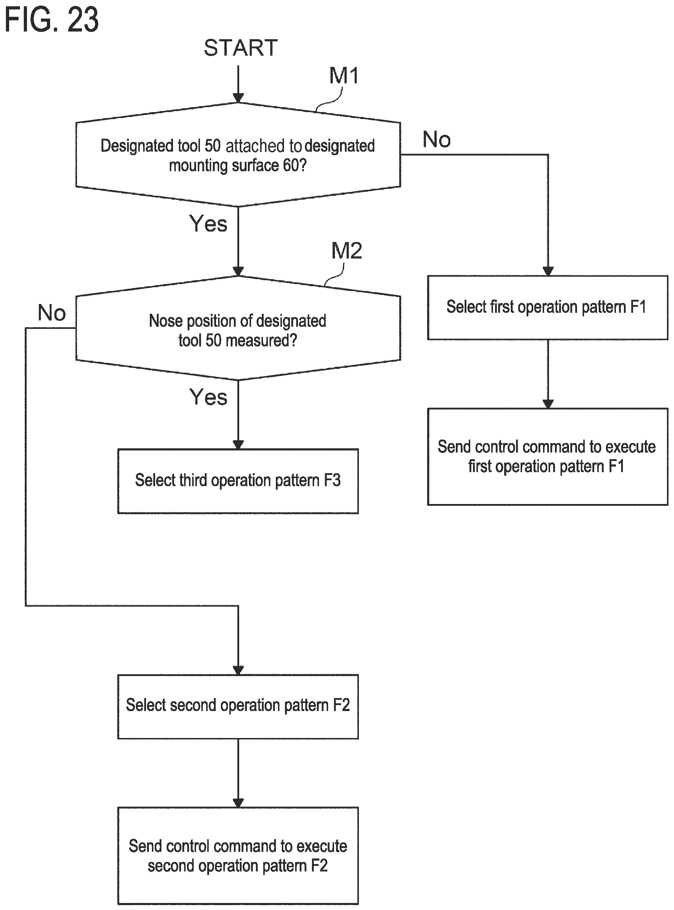

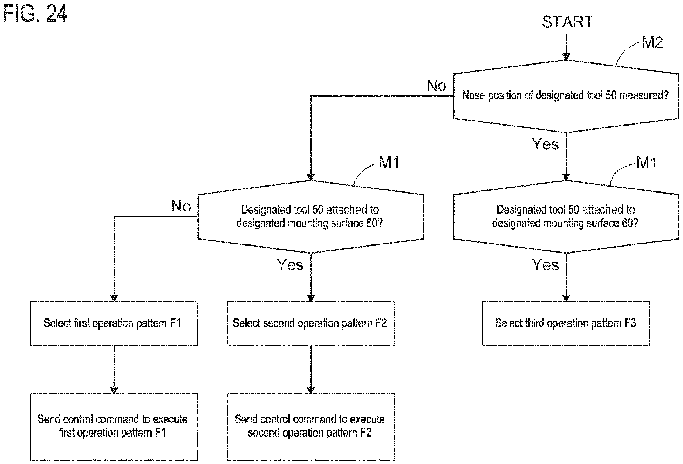

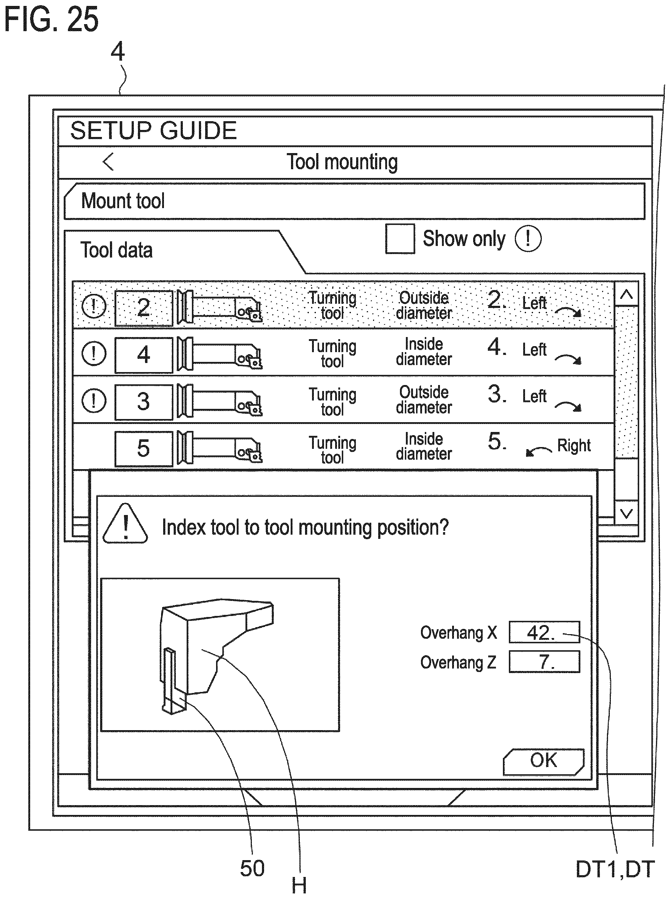

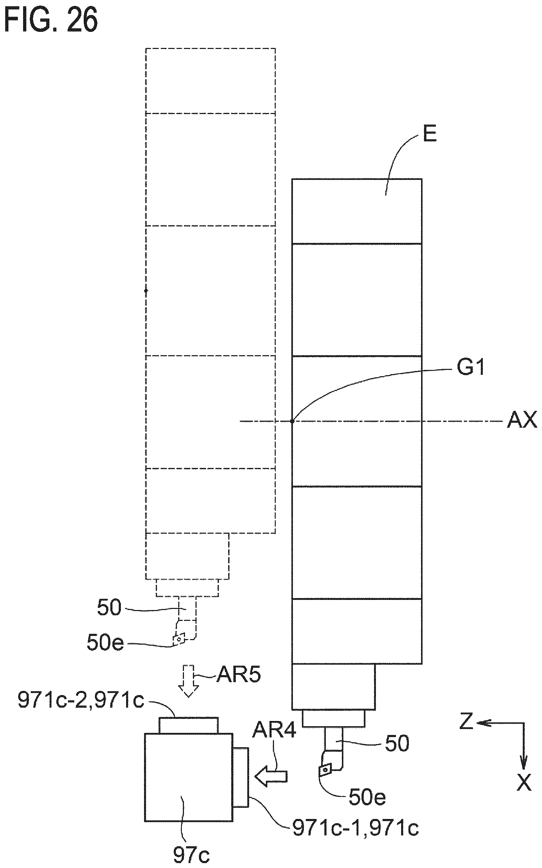

The turret lathe 1A and the tool preparation method in the first embodiment will be described with reference to FIG. 1 to FIG. 26. FIG. 1 is a schematic perspective diagram illustrating the turret lathe 1A in the first embodiment. FIG. 2 is a block diagram illustrating a hardware configuration example of a controller 2. FIG. 3 is a flowchart showing one example of the tool preparation method in the first embodiment. FIG. 4 and FIG. 5 are schematic cross-sectional diagrams illustrating one part of the turret lathe 1A in the first embodiment. FIG. 6 is a diagram illustrating an image Q3 shown on a display 4, prompting to mount a designated tool 50. FIG. 7 to FIG. 14 are schematic cross-sectional diagrams illustrating one part of the turret lathe 1A in the first embodiment. FIG. 15 is a flowchart showing one example of the tool preparation method in the first embodiment. FIG. 16 to FIG. 20 are schematic cross-sectional diagrams illustrating one part of the turret lathe 1A in the first embodiment. FIG. 21 is a flowchart showing one example of the tool preparation method in the first embodiment. FIG. 22 is a schematic cross-sectional diagram illustrating one part of the turret lathe 1A in the first embodiment. FIG. 23 is a flowchart showing one example of the tool preparation method in the first embodiment. FIG. 24 is a flowchart showing one example of the tool preparation method in the first embodiment. FIG. 25 is a diagram illustrating how a fourth operation pattern is made selectable. FIG. 26 is a diagram illustrating how a nose position is measured.

### (Tool preparation method)

As illustrated in FIG. 1, the turret lathe 1A in the first embodiment includes a turret E that has a plurality of mounting surfaces 6, a rotation drive unit 96 that rotates the turret E about a first axis AX, a moving unit 95 that moves the turret E, a controller 2, and a measurement unit 97. The controller 2 controls control targets including the rotation drive unit 96 and moving unit 95. The measurement unit 97 measures the nose positions. The turret lathe 1A may include a display 4.

As illustrated in FIG. 3, a first determination processing M1 is carried out in a first step ST1. The first step ST1 is a first determination step. In the first determination step (or the first determination processing M1), it is determined whether or not a designated tool 50 is attached to the designated mounting surface 60, which is one of the plurality of mounting surfaces 6 of the turret E. This determination is made by the controller 2.

In the example depicted in FIG. 4, the designated tool 50 is not attached to the designated mounting surface 60. Therefore, in the example depicted in FIG. 4, the result of the first determination processing M1 indicates that the designated tool 50 is not attached to the designated mounting surface 60 (in other words, the result of the first determination processing M1 in FIG. 3 will be "No").

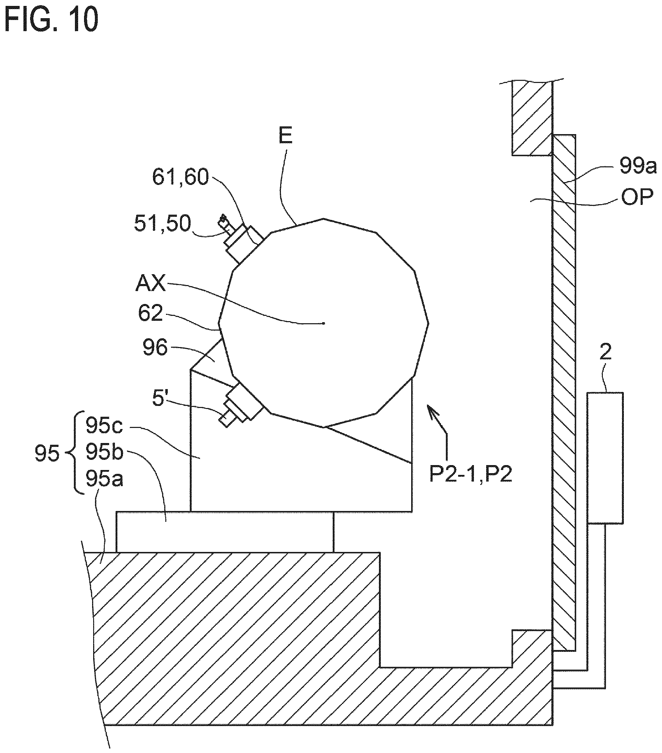

In the example depicted in FIG. 10, the designated tool 50 is attached to the designated mounting surface 60. Therefore, in the example depicted in FIG. 10, the result of the first determination processing M1 indicates that the designated tool 50 is attached to the designated mounting surface 60 (in other words, the result of the first determination processing M1 in FIG. 3 will be "Yes").

As illustrated in FIG. 3, a specific operation pattern (F1 or F2) is selected from among a plurality of operation patterns in a second step ST2. The second step ST2 is a selection step. In the selection step, a specific operation pattern (F1 or F2) is selected from among a plurality of operation patterns based on the result of the first determination processing M1. This selection is made by the controller 2.

In the example depicted in FIG. 3, the plurality of operation patterns includes at least a first operation pattern F1 and a second operation pattern F2.

The first operation pattern F1 is executed when the result of the first determination processing M1 is "No," in other words, when the result indicates that the designated tool 50 is not attached to the designated mounting surface 60. The designated tool 50 not being attached to the designated mounting surface 60 means that the designated tool 50 is in a condition before being attached to the designated mounting surface 60. The designated tool 50 being in a condition before being attached to the designated mounting surface 60 means that the designated tool 50 is either (1) in a condition before being attached to the turret E, or (2) attached to one of the plurality of mounting surfaces 6 of the turret E other than the designated mounting surface 60.

The second operation pattern F2 is executed when the result of the first determination processing M1 is "Yes," in other words, when the result indicates that the designated tool 50 is attached to the designated mounting surface 60.

As illustrated in FIG. 3, a control command is sent in a third step ST3 so that the selected specific operation pattern (F1 or F2) is executed. The third step ST3 is a step of sending a control command. In the control command sending step, control commands are sent to the rotation drive unit 96 and the moving unit 95, so that the selected specific operation pattern (F1 or F2) is executed. The control commands are sent by the controller 2.

FIG. 4 to FIG. 9 illustrate one example of how the first operation pattern F1 is executed.

As illustrated in FIG. 4 and FIG. 5, the first operation pattern F1 includes rotating the turret E about the first axis AX for the designated mounting surface 60 to be brought to an indexed mounting position P1 before the designated tool 50 is attached to the designated mounting surface 60. The turret E is rotated by the rotation drive unit 96 that receives a control command from the controller 2.

As illustrated in FIG. 2, data 351a for specifying the indexed mounting position P1 is preferably stored in a memory 3 of the turret lathe 1A in advance. The indexed mounting position P1 should preferably be located where the operator has easy access.

The designated mounting surface 60 positioned at the indexed mounting position P1 allows the operator to readily perform the operation of mounting the designated tool 50 on the designated mounting surface 60. When a non-designated tool 5' that is different from the designated tool 50 is attached to the designated mounting surface 60, the non-designated tool 5' is removed from the designated mounting surface 60 prior to the mounting of the designated tool 50 on the designated mounting surface 60. In this case, the indexed mounting position P1 serves also as an indexed disengaging position for disengaging the non-designated tool 5' from the designated mounting surface 60.

During the execution of the first operation pattern F1, the controller 2 may present an image Q3 on a display 4 prompting to mount the designated tool 50 in response to the designated mounting surface 60 having reached the indexed mounting position P1 (see FIG. 6).

Such an image Q3 being presented on the display 4 during the execution of the first operation pattern F1 helps the operator mount the designated tool 50 on the designated mounting surface 60 at the appropriate times.

In the example depicted in FIG. 6, the image Q3 prompting to mount the designated tool 50 includes a message MG prompting to mount the designated tool 50.

In the example depicted in FIG. 6, the image Q3 prompting to mount the designated tool 50 includes recommended relative position data DT for the designated tool 50 relative to the tool holding unit H. More specifically, the image Q3 prompting to mount the designated tool 50 includes a recommended value DT1 of overhang for the designated tool 50 relative to the tool holding unit H along the longitudinal direction of the designated tool 50. In this case, the operator can mount the designated tool 50 on the tool holding unit H such that the designated tool 50 extends from the tool holding unit H by the recommended value DT1. This allows the operator to efficiently perform the operation of mounting the designated tool 50 on the tool holding unit H. The image Q may be an indication that prompts to mount both of the designated tool 50 and the tool holding unit H for holding the designated tool 50.

FIG. 7 shows the state after the designated tool 50 has been attached to the designated mounting surface 60.

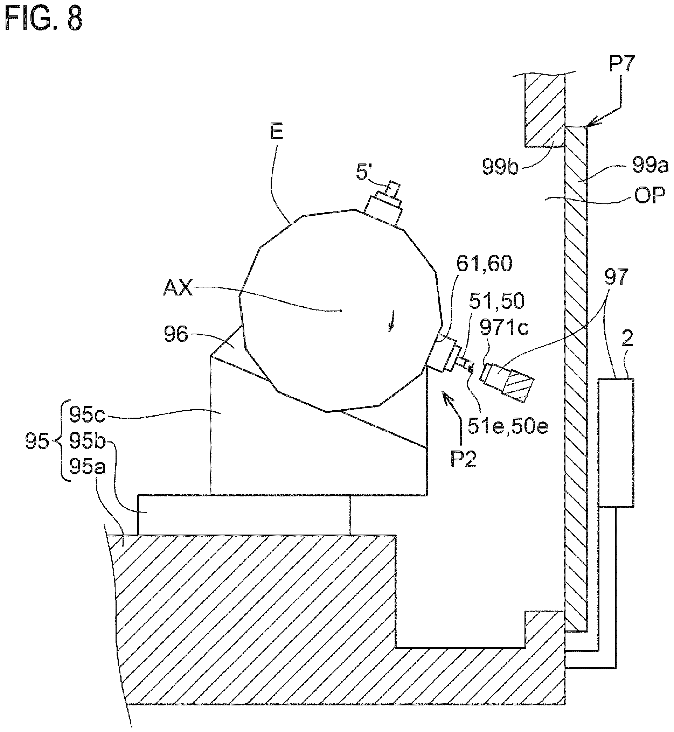

As illustrated in FIG. 8, the first operation pattern F1 includes rotating the turret E about the first axis AX for the designated mounting surface 60 to be brought to an indexed position P2 for nose position measurement after the designated tool 50 has been attached to the designated mounting surface 60. The turret E is rotated by the rotation drive unit 96 that receives a control command from the controller 2.

As illustrated in FIG. 2, data 352a for specifying the indexed position P2 for nose position measurement is preferably stored in the memory 3 of the turret lathe 1A in advance. The indexed position P2 for nose position measurement should preferably be located relatively close to a contact surface 971c of the measurement unit 97.

The first operation pattern F1 includes a measurement of the position of the nose 50e of the designated tool 50 with the measurement unit 97.

Hereinafter, the step of measuring the position of the nose 50e of the designated tool 50 will be referred to as the "measurement step."

The first operation pattern F1 (more specifically, the measurement step) may include moving the entire turret E to bring the nose 50e of the designated tool 50 to a wait position close to the contact surface 971c of the measurement unit 97. This movement of the entire turret E is carried out by the moving unit 95 that receives a control command from the controller 2.

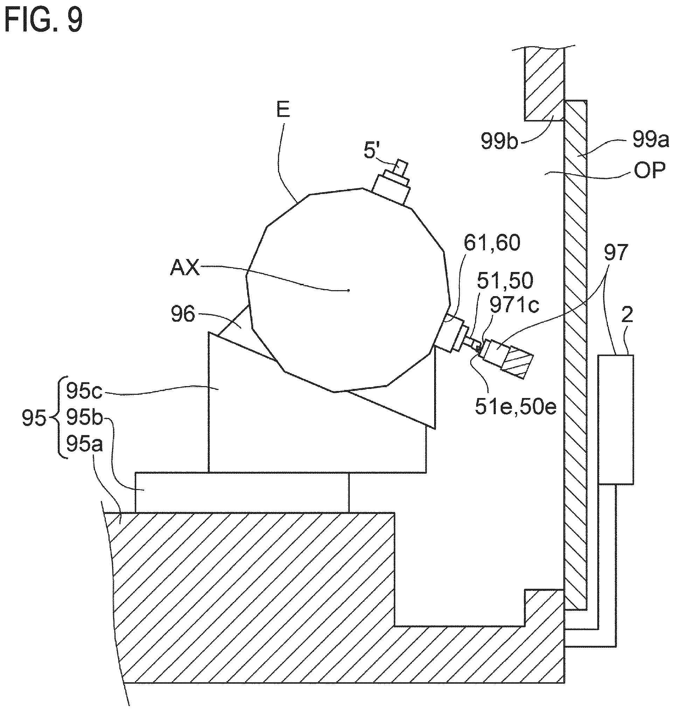

As illustrated in FIG. 9, the first operation pattern F1 (more specifically, the measurement step) may include moving the entire turret E toward the contact surface 971c to bring the nose 50e of the designated tool 50 into contact with the contact surface 971c of the measurement unit 97. This movement of the entire turret E is carried out by the moving unit 95 that receives a control command from the controller 2.

Alternatively, the first operation pattern F1 (more specifically, the measurement step) may include moving the contact surface 971c of the measurement unit 97 toward the nose 50e so that the contact surface 971c makes contact with the nose 50e of the designated tool 50.

In the example depicted in FIG. 9, the measurement unit 97 measures the position of the turret E when the nose 50e of the designated tool 50 attached to the designated mounting surface 60 makes contact with the contact surface 971c of the measurement unit 97 to determine the relative position of the nose 50e of the designated tool 50 relative to a reference position of the turret E. The position of the nose 50e of the designated tool 50 is thus measured. The contact surface 971c may be omitted when the measurement unit 97 is a non-contact type measurement device (e.g., a device that measures the position of the nose using a camera or the like). The block 97c (e.g., see FIG. 1) that defines the contact surface 971c and the arm 97f that supports this block 97c may be configured to be in a retracted position outside of the preparation operation area except when nose measurement is performed. The turret lathe 1A may include a mechanism that stores the block 97c and arm 97f in a storage area outside of the preparation operation area. The block 97c that defines the contact surface 971c is located in the retracted position and therefore not shown in FIG. 4, FIG. 5, FIG. 7, FIG. 10, FIG. 13, FIG. 14, FIG. 16, FIG. 17, FIG. 18, FIG. 22, and FIG. 37.

FIG. 10 to FIG. 12 illustrate one example of how the second operation pattern F2 is executed.

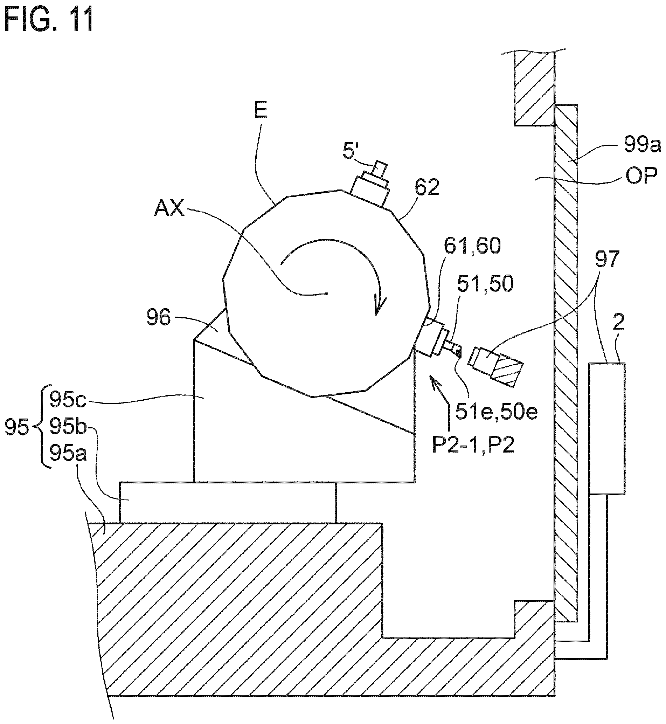

As illustrated in FIG. 10 and FIG. 11, the second operation pattern F2 includes rotating the turret E about the first axis AX for the designated mounting surface 60 with the designated tool 50 mounted thereon to be directly brought to the indexed position P2 for nose position measurement. The turret E is rotated by the rotation drive unit 96 that receives a control command from the controller 2.

The second operation pattern F2 includes a measurement of the position of the nose 50e of the designated tool 50 with the measurement unit 97.

The second operation pattern F2 (more specifically, the measurement step) may include moving the entire turret E to bring the nose 50e of the designated tool 50 to a wait position close to the contact surface 971c of the measurement unit 97. This movement of the entire turret E is carried out by the moving unit 95 that receives a control command from the controller 2.

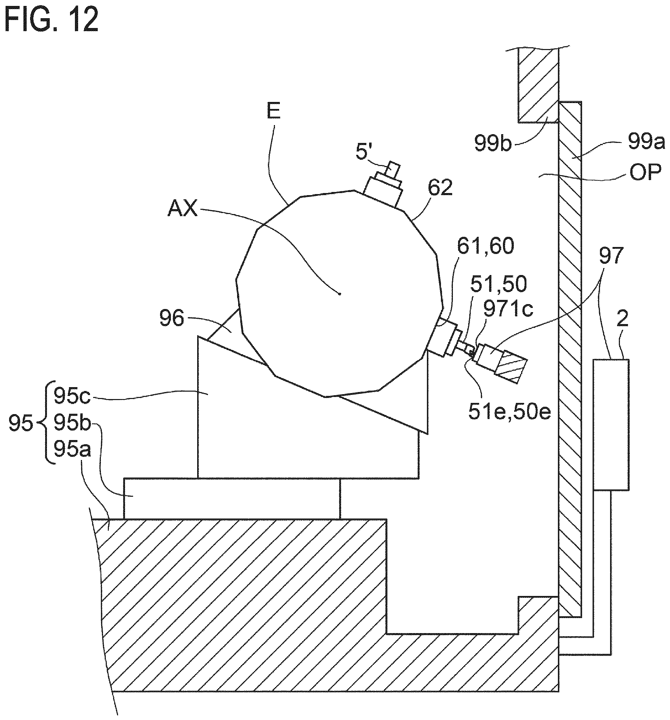

As illustrated in FIG. 12, the second operation pattern F2 (more specifically, the measurement step) may include moving the entire turret E toward the contact surface 971c to bring the nose 50e of the designated tool 50 into contact with the contact surface 971c of the measurement unit 97. This movement of the entire turret E is carried out by the moving unit 95 that receives a control command from the controller 2.

Alternatively, the second operation pattern F2 (more specifically, the measurement step) may include moving the contact surface 971c of the measurement unit 97 toward the nose 50e so that the contact surface 971c makes contact with the nose 50e of the designated tool 50.

In the example depicted in FIG. 12, the measurement unit 97 measures the position of the turret E when the nose 50e of the designated tool 50 attached to the designated mounting surface 60 makes contact with the contact surface 971c of the measurement unit 97 to determine the relative position of the nose 50e of the designated tool 50 relative to the reference position of the turret E.

In the tool preparation method in the first embodiment, the first operation pattern F1 is executed when the designated tool 50 is not attached to the designated mounting surface 60. The first operation pattern F1 includes bringing the designated mounting surface 60 to the indexed mounting position P1. This allows the operator to readily perform the operation of mounting the designated tool 50 on the designated mounting surface 60.

In the tool preparation method in the first embodiment, the second operation pattern F2 is executed when the designated tool 50 is attached to the designated mounting surface 60. The second operation pattern F2 includes bringing the designated mounting surface 60 directly to the indexed position P2 for nose position measurement. Thus the procedure including the measurement of the nose position of the designated tool 50 can be performed quickly.

### (Turret lathe 1A)

The turret lathe 1A in the first embodiment will be described with reference to FIG. 1 to FIG. 26.

As illustrated in FIG. 1, the turret lathe 1A in the first embodiment includes the turret E, rotation drive unit 96, moving unit 95, measurement unit 97, and controller 2. The turret lathe 1A may include the display 4.

The turret E has a plurality of mounting surfaces 6. Each of the plurality of mounting surfaces 6 allows a tool to be mounted thereon.

The rotation drive unit 96 rotates the turret E about the first axis AX. The moving unit 95 moves the turret E (more specifically, the entire turret E).

The measurement unit 97 has the contact surface 971c for the nose Be of a tool to touch. The measurement unit 97 measures the position of the nose Be of a tool. More specifically, the measurement unit 97 measures the position of the turret E when the nose Be of the tool attached to the turret E makes contact with the contact surface 971c of the measurement unit 97 to determine the relative position of the nose Be of the tool relative to the reference position of the turret E. The contact surface 971c may be omitted when the measurement unit 97 is a non-contact type measurement device (e.g., a device that measures the position of the nose using a camera or the like).

The controller 2 controls a plurality of control targets (e.g., the rotation drive unit 96, moving unit 95, and others). As illustrated in FIG. 2, the controller 2 includes at least one processor 2a (e.g., at least one CPU). The controller 2 may be divided into several units. In other words, several units may cooperate to function as the controller 2.

In the example depicted in FIG. 2, the turret lathe 1A (more specifically, the controller 2) includes the memory 3, display 4, and a communication circuit 12. In the example depicted in FIG. 2, the memory 3, display 4, and communication circuit 12 are all included in the controller 2. Alternatively, at least a part of each of the memory 3, display 4, and communication circuit 12 may be provided separately from the controller 2, and configured to be able to communicate with the controller 2.

The memory 3 stores a program 39 and data. The memory 3 is a storage medium readable by a processor 2a. The memory 3 may for example be a non-volatile or volatile semiconductor memory such as a RAM, ROM, or flash memory, or a magnetic disc, or any other types of memories.

The memory 3 may be distributed in several locations. For example, the memory that stores data may be provided separately from the memory that stores the program 39. A part of the memory 3 may be located away from the communication circuit 12. In other words, a part of the memory 3 may provide the processor 2a with a part of the program 39 or a part of the data via the communication circuit 12 when the processor 2a executes the program 39.

The turret lathe 1A may include an input unit 11. The input unit 11 may be integrated into the display 4 (more specifically, the display 4 may be a display 40 with a touchscreen including a built-in input unit 11a). Alternatively, or additionally, the turret lathe 1A may include input units 11b provided separately from the display 4 (such as, for example, a button, switch, lever, pointing device, keyboard, and so on).

In the example depicted in FIG. 2, the processor 2a, memory 3, communication circuit 12, display 4, and/or input unit 11 are all interconnected via a bus 13.

The controller 2 performs the first determination processing M1 (see FIG. 3) to determine whether or not a designated tool 50 is attached to a designated mounting surface 60, which is one of the plurality of mounting surfaces 6 of the turret E.

The controller 2 selects a specific operation pattern from among a plurality of operation patterns including a first operation pattern F1 and a second operation pattern F2 based on the result of the first determination processing M1. The controller 2 also sends control commands CR to the rotation drive unit 96 and the moving unit 95, so that the selected specific operation pattern is executed.

In the example depicted in FIG. 3, the plurality of operation patterns includes at least the first operation pattern F1 and the second operation pattern F2.

The first operation pattern F1 is executed when the result of the first determination processing M1 indicates that the designated tool 50 is not attached to the designated mounting surface 60. The second operation pattern F2 is executed when the result of the first determination processing M1 indicates that the designated tool 50 is attached to the designated mounting surface 60.

As illustrated in FIG. 4 and FIG. 5, the first operation pattern F1 includes rotating the turret E about the first axis AX for the designated mounting surface 60 to be brought to an indexed mounting position P1 before the designated tool 50 is attached to the designated mounting surface 60. More specifically, the first operation pattern F1 includes rotating the turret E about the first axis AX by the rotation drive unit 96 that receives a control command from the controller 2 for the designated mounting surface 60 before the designated tool 50 is mounted thereon to be brought to the indexed mounting position P1.

As illustrated in FIG. 2, data 351a for specifying the indexed mounting position P1 is preferably stored in the memory 3 in advance. The indexed mounting position P1 should preferably be located where the operator has easy access.

The designated mounting surface 60 positioned at the indexed mounting position P1 allows the operator to readily perform the operation of mounting the designated tool 50 on the designated mounting surface 60.

During the execution of the first operation pattern F1, the controller 2 may present an image Q3 on the display 4 prompting to mount the designated tool 50 in response to the designated mounting surface 60 having reached the indexed mounting position P1 (see FIG. 6).

Such an image Q3 prompting to mount the designated tool 50, when presented on the display 4 during the execution of the first operation pattern F1, helps the operator mount the designated tool 50 on the designated mounting surface 60 at the appropriate times. Since the image Q3 prompting to mount the designated tool 50 has already been described in detail, repetitive description of the image Q3 will be omitted.

FIG. 7 shows the state after the designated tool 50 has been attached to the designated mounting surface 60.

As illustrated in FIG. 8, the first operation pattern F1 includes rotating the turret E about the first axis AX for the designated mounting surface 60 to be brought to an indexed position P2 for nose position measurement after the designated tool 50 has been attached to the designated mounting surface 60. More specifically, the first operation pattern F1 includes rotating the turret E about the first axis AX by the rotation drive unit 96 that receives a control command from the controller 2 for the designated mounting surface 60 with the designated tool 50 mounted thereon to be brought to the indexed position P2 for nose position measurement.

As illustrated in FIG. 2, data 352a for specifying the indexed position P2 for nose position measurement is preferably stored in the memory 3 in advance. The indexed position P2 for nose position measurement should preferably be located relatively close to the contact surface 971c of the measurement unit 97.

As illustrated in FIG. 9, the first operation pattern F1 includes measuring the position of the nose 50e of the designated tool 50 using the measurement unit 97.

The first operation pattern F1 may include moving the entire turret E to bring the nose 50e of the designated tool 50 to a wait position close to the contact surface 971c of the measurement unit 97. More specifically, the first operation pattern F1 may include moving the entire turret E by the moving unit 95 that receives a control command from the controller 2 to bring the nose 50e of the designated tool 50 to a wait position close to the contact surface 971c of the measurement unit 97.

The first operation pattern F1 may include moving the entire turret E toward the contact surface 971c to bring the nose 50e of the designated tool 50 into contact with the contact surface 971c of the measurement unit 97. More specifically, the first operation pattern F1 may include moving the entire turret E by the moving unit 95 that receives a control command from the controller 2 to bring the nose 50e of the designated tool 50 into contact with the contact surface 971c of the measurement unit 97.

Alternatively, the first operation pattern F1 may include moving the contact surface 971c of the measurement unit 97 toward the nose 50e so that the contact surface 971c makes contact with the nose 50e of the designated tool 50. Further alternatively, the first operation pattern F1 may include measuring the position of the nose 50e of the designated tool 50 in a non-contact manner.

In the example depicted in FIG. 9, the measurement unit 97 measures the position of the turret E when the nose 50e of the designated tool 50 attached to the designated mounting surface 60 makes contact with the contact surface 971c of the measurement unit 97 to determine the relative position of the nose 50e of the designated tool 50 relative to the reference position of the turret E. The position of the nose 50e of the designated tool 50 is thus measured.

As illustrated in FIG. 10 and FIG. 11, the second operation pattern F2 includes rotating the turret E about the first axis AX for the designated mounting surface 60 with the designated tool 50 mounted thereon to be directly brought to the indexed position P2 for nose position measurement. More specifically, the second operation pattern F2 includes rotating the turret E about the first axis AX by the rotation drive unit 96 that receives a control command from the controller 2 for the designated mounting surface 60 with the designated tool 50 mounted thereon to be directly brought to the indexed position P2 for nose position measurement.

As illustrated in FIG. 12, the second operation pattern F2 includes measuring the position of the nose 50e of the designated tool 50 using the measurement unit 97.

The second operation pattern F2 may include moving the entire turret E to bring the nose 50e of the designated tool 50 to a wait position close to the contact surface 971c of the measurement unit 97. More specifically, the second operation pattern F2 may include moving the entire turret E by the moving unit 95 that receives a control command from the controller 2 to bring the nose 50e of the designated tool 50 to a wait position close to the contact surface 971c of the measurement unit 97.

The second operation pattern F2 may include moving the entire turret E toward the contact surface 971c to bring the nose 50e of the designated tool 50 into contact with the contact surface 971c of the measurement unit 97. More specifically, the second operation pattern F2 may include moving the entire turret E by the moving unit 95 that receives a control command from the controller 2 to bring the nose 50e of the designated tool 50 into contact with the contact surface 971c of the measurement unit 97.

Alternatively, the second operation pattern F2 may include moving the contact surface 971c of the measurement unit 97 toward the nose 50e so that the contact surface 971c makes contact with the nose 50e of the designated tool 50. Further alternatively, the second operation pattern F2 may include measuring the position of the nose 50e of the designated tool 50 in a non-contact manner.

In the example depicted in FIG. 12, the measurement unit 97 measures the position of the turret E when the nose 50e of the designated tool 50 attached to the designated mounting surface 60 makes contact with the contact surface 971c of the measurement unit 97 to determine the relative position of the nose 50e of the designated tool 50 relative to the reference position of the turret E. The position of the nose 50e of the designated tool 50 is thus measured.

In the turret lathe 1A in the first embodiment, the first operation pattern F1 is executed when the designated tool 50 is not attached to the designated mounting surface 60. The first operation pattern F1 includes bringing the designated mounting surface 60 to the indexed mounting position P1. This allows the operator to readily perform the operation of mounting the designated tool 50 on the designated mounting surface 60.

In the turret lathe 1A in the first embodiment, the second operation pattern F2 is executed when the designated tool 50 is attached to the designated mounting surface 60. The second operation pattern F2 brings the designated mounting surface 60 directly to the indexed position P2 for nose position measurement. Thus the procedure including the measurement of the nose position of the designated tool 50 can be performed quickly.

### (Optional or additional configurations)

Next, some optional or additional configurations that may be adopted in the turret lathe 1A and tool preparation method in the first embodiment will be described with reference to FIG. 1 to FIG. 26.

### (Door 99a)

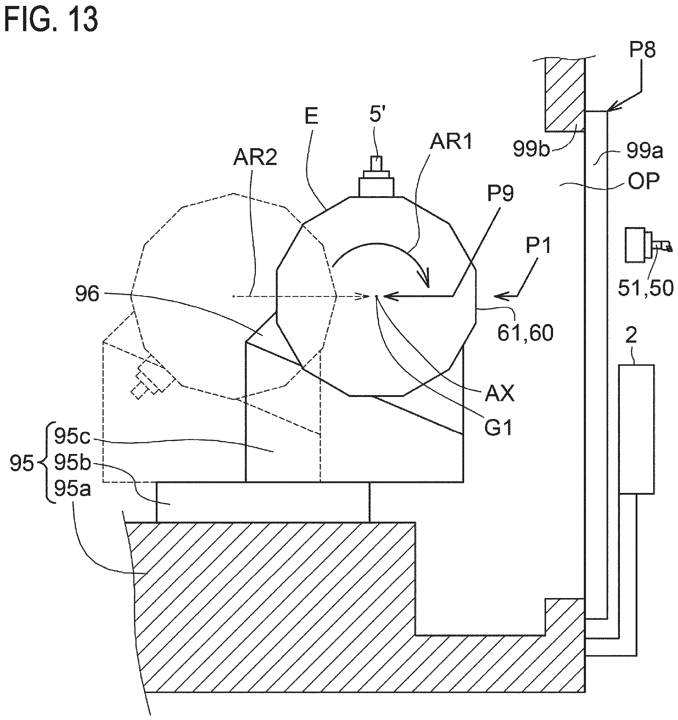

As illustrated in FIG. 13, the turret lathe 1A may include an access opening OP that allows the operator to access the turret E. The turret lathe 1A may include a door 99a that can close this access opening OP.

In the example depicted in FIG. 13, the first operation pattern F1 includes rotating the turret E about the first axis AX (see arrow AR1) for the designated mounting surface 60 to be brought to the indexed mounting position P1 before the designated tool 50 is attached to the designated mounting surface 60. The turret is rotated by the rotation drive unit 96 that receives a control command from the controller 2.

In the example depicted in FIG. 13, the first operation pattern F1 includes moving the entire turret E to bring the designated mounting surface 60 closer to the access opening OP before the designated tool 50 is attached to the designated mounting surface 60. More specifically, the first operation pattern F1 includes moving the entire turret E by the moving unit 95 that receives a control command from the controller 2 for the designated mounting surface 60 before the designated tool 50 is mounted thereon to come closer to the access opening OP. The first operation pattern F1 may include moving the entire turret E by the moving unit 95 that receives a control command from the controller 2 to bring the reference position G1 of the turret to a first position P9 that is relatively close to the access opening OP. Data 361a for specifying the first position P9 should preferably be stored in the memory 3 in advance.

In the first operation pattern F1, either of the operation of rotating the turret E about the first axis AX (see arrow AR1) and the operation of moving the entire turret E closer to the access opening OP (see arrow AR2) may be carried out first. The operation of rotating the turret E about the first axis AX (see arrow AR1) and the operation of moving the entire turret E closer to the access opening OP (see arrow AR2) in the first operation pattern F1 may be carried out simultaneously. The block 97c (see FIG. 1) that defines the contact surface 971c and the arm 97f that supports the block 97c, when in the advanced position, may obstruct the rotation of the turret E, or the movement of the entire turret E, or the operator's operation of mounting the designated tool 50. Therefore, the block 97c and arm 97f should preferably be moved from the advanced position to a retracted position before the operation of rotating the turret E (see arrow AR1 in FIG. 13) and the operation of moving the entire turret E (see arrow AR2 in FIG. 13) are carried out. The block 97c and arm 97f may be moved from the advanced position to the retracted position after the measurement of the nose position of a previous designated tool has been completed. In these cases, the block 97c and arm 97f are moved from the advanced position to the retracted position after the mounting of the designated tool 50 on the designated mounting surface 60 and before the measurement of the nose position of the designated tool 50 in the first operation pattern F1.

Alternatively, or additionally, the first operation pattern F1 may include: (1) moving the door 99a from a closed position P7 where it closes the access opening OP (see FIG. 5) to an open position P8 where it opens the access opening OP (see FIG. 7 or FIG. 13) after the designated mounting surface 60 has been brought to the indexed mounting position P1; and (2) moving the door 99a from the open position P8 where it opens the access opening OP (see FIG. 7 or FIG. 13) to the closed position P7 where it closes the access opening OP (see FIG. 8) after the designated tool 50 has been attached to the designated mounting surface 60.

In this case, the door 99a will close the access opening OP before and after the operation of mounting the designated tool 50 on the designated mounting surface 60. This allows the operator to perform the preparation operation before the machining of the workpiece more safely.

The access opening OP may be closed at all times by the door 99a during the execution of the second operation pattern F2. In this case, the operator can perform the preparation operation before the machining of the workpiece more safely.

The door 99a is moved between the closed position P7 and the open position P8 by a door moving unit 99b that moves the door 99a. More specifically, the door moving unit 99b that receives a control command from the controller 2 moves the door 99a from the closed position P7 to the open position P8. The door moving unit 99b that receives a control command from the controller 2 moves the door 99a from the open position P8 to the closed position P7.

### (First designated tool 51 and second designated tool 52)

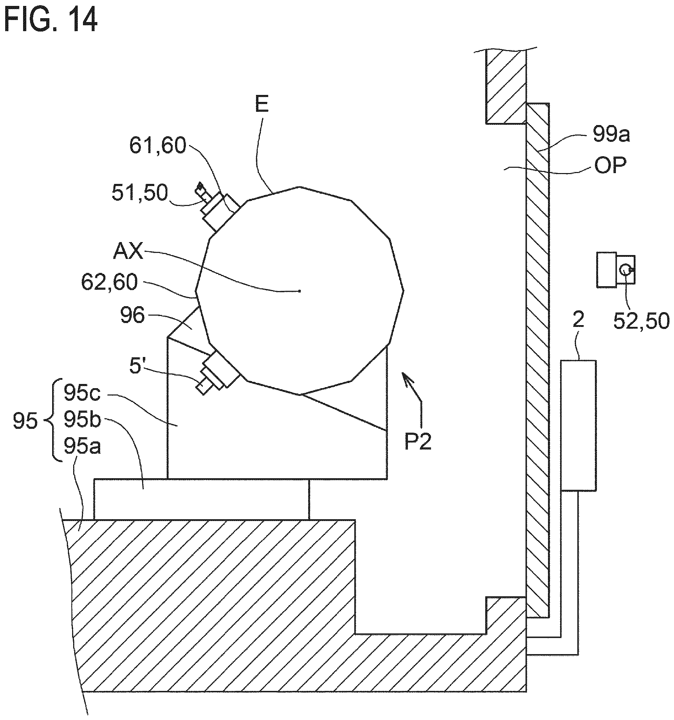

One example in which the plurality of designated tools 50 includes a first designated tool 51 and a second designated tool 52 will be described. In the example described here, as illustrated in FIG. 14, the plurality of designated tools 50 includes (1) a first designated tool 51 attached to a first designated mounting surface 61, with its nose position not measured yet, and (2) a second designated tool 52 before it is attached to a second designated mounting surface 62, with its nose position not measured yet. In this case, the controller 2 sends control commands to the rotation drive unit 96 and the moving unit 95 (see FIG. 15), so that the first operation pattern F1 and second operation pattern F2 are both executed.

In the example depicted in FIG. 15, the first determination processing M1 mentioned before includes determining whether or not the first designated tool 51 is attached to the first designated mounting surface 61 that is one of the plurality of mounting surfaces 6. In the example depicted in FIG. 15, the controller 2 selects the second operation pattern F2 from among a plurality of operation patterns based on the result of the first determination processing M1 about the first designated tool 51. The controller 2 also sends control commands to the rotation drive unit 96 and the moving unit 95, so that the selected second operation pattern F2 is executed.

FIG. 10 to FIG. 12 illustrate one example of how the second operation pattern F2 is executed.

As illustrated in FIG. 10 and FIG. 11, the second operation pattern F2 includes rotating the turret E about the first axis AX for the first designated mounting surface 61 with the first designated tool 51 mounted thereon to be directly brought to a first indexed position P2-1 for nose position measurement.

As illustrated in FIG. 12, the second operation pattern F2 includes measuring the position of the nose 51e of the first designated tool 51 using the measurement unit 97.

The second operation pattern F2 may include moving the entire turret E to bring the nose 51e of the first designated tool 51 into contact with the contact surface 971c of the measurement unit 97.

In the example depicted in FIG. 12, the measurement unit 97 measures the position of the turret E when the nose 51e of the first designated tool 51 attached to the first designated mounting surface 61 makes contact with the contact surface 971c of the measurement unit 97, to determine the relative position of the nose 51e of the first designated tool 51 relative to the reference position of the turret E. The position of the nose 51e of the first designated tool 51 is thus measured.

In the example depicted in FIG. 15, the first determination processing M1 mentioned before includes determining whether or not the second designated tool 52 is attached to the second designated mounting surface 62 that is one of the plurality of mounting surfaces 6. In the example depicted in FIG. 15, the controller 2 selects the first operation pattern F1 from among a plurality of operation patterns based on the result of the first determination processing M1 about the second designated tool 52. The controller 2 also sends control commands to the rotation drive unit 96 and the moving unit 95, so that the selected first operation pattern F1 is executed.

FIG. 16 to FIG. 19 illustrate one example of how the first operation pattern F1 is executed.

As illustrated in FIG. 16, the first operation pattern F1 includes moving the entire turret E (see arrow AR3) to bring the second designated mounting surface 62 closer to the access opening OP before the second designated tool 52 is attached to the second designated mounting surface 62. The turret is moved by the moving unit 95 that receives a control command from the controller 2.

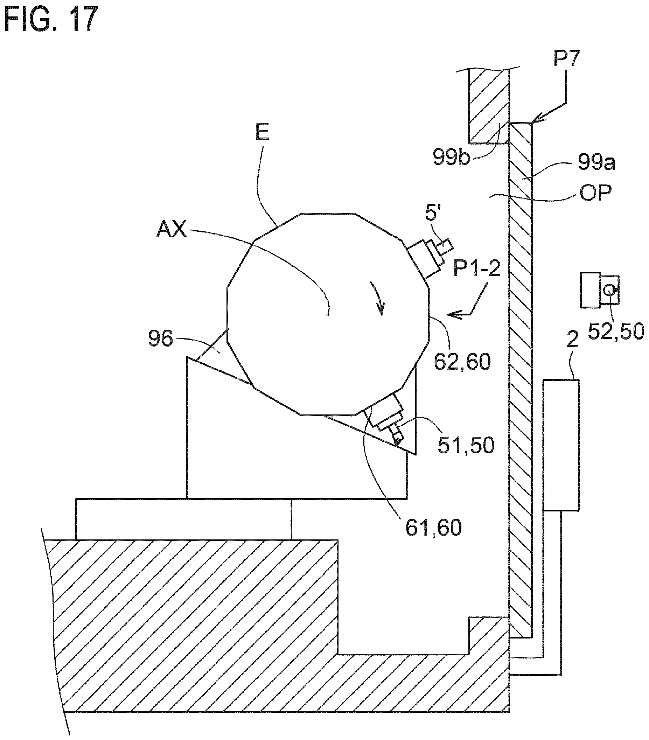

As illustrated in FIG. 17, the first operation pattern F1 includes rotating the turret E about the first axis AX for the second designated mounting surface 62 to be brought to a second indexed mounting position P1-2 before the second designated tool 52 is attached to the second designated mounting surface 62. The turret is rotated by the rotation drive unit 96 that receives a control command from the controller 2. The second indexed mounting position P1-2 may be the same as the indexed mounting position P1 described in the foregoing (see FIG. 5), or different from the previously described indexed mounting position P1.

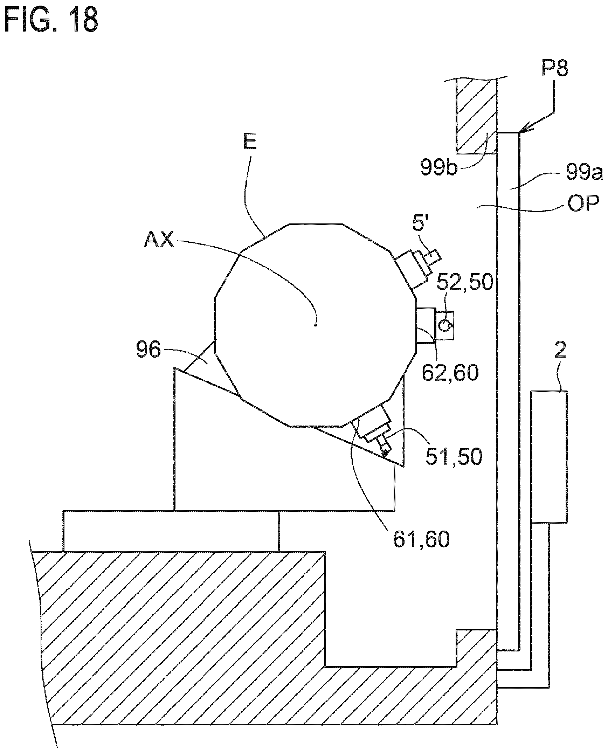

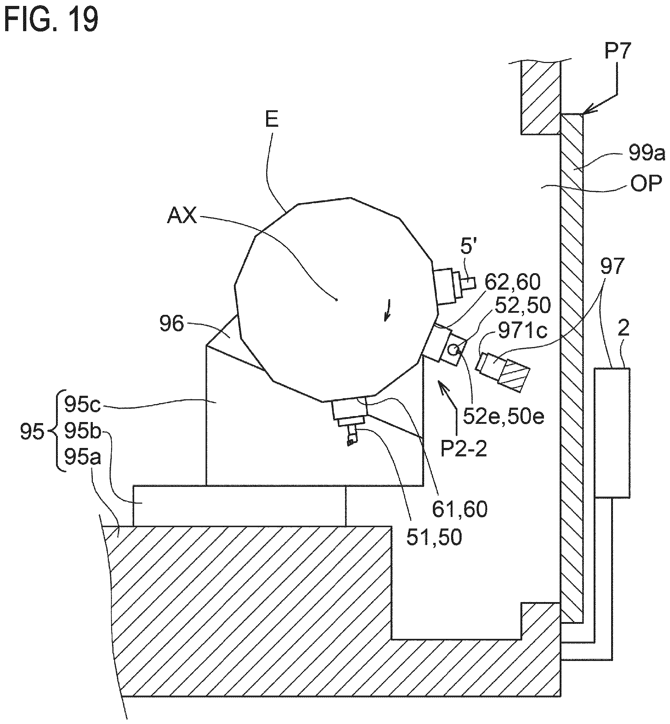

As illustrated in FIG. 17 and FIG. 18, the first operation pattern F1 may include moving the door 99a from the closed position P7 to the open position P8 before the second designated tool 52 is attached to the second designated mounting surface 62. As illustrated in FIG. 18 and FIG. 19, the first operation pattern F1 may include moving the door 99a from the open position P8 to the closed position P7 after the second designated tool 52 has been attached to the second designated mounting surface 62. The door 99a is moved by the door moving unit 99b that receives a control command from the control command 2.

The controller 2 may present an image on the display 4 prompting to mount the second designated tool 52 (more specifically, an image similar to the image Q3 shown in FIG. 6) in response to the second designated mounting surface 62 having reached the second indexed mounting position P1-2 (see FIG. 17) during the execution of the first operation pattern F1.

FIG. 18 shows the state after the second designated tool 52 has been attached to the second designated mounting surface 62.

As illustrated in FIG. 19, the first operation pattern F1 includes rotating the turret E about the first axis AX for the second designated mounting surface 62 to be brought to a second indexed position P2-2 for nose position measurement after the second designated tool 52 has been attached to the second designated mounting surface 62. The turret is rotated by the rotation drive unit 96 that receives a control command from the controller 2. The second indexed position P2-2 for nose position measurement may be the same as the first indexed position P2-1 for nose position measurement described in the foregoing (see FIG. 11), or different from the previously described first indexed position P2-1 for nose position measurement.

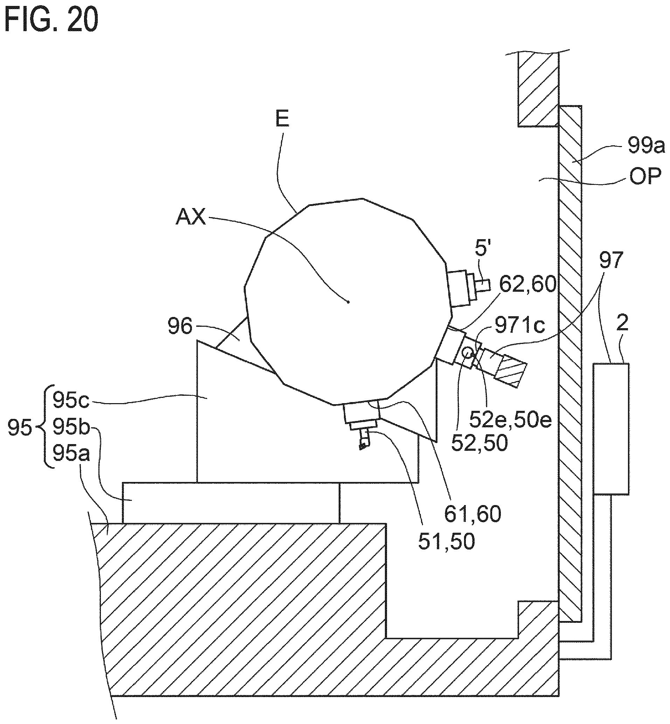

As illustrated in FIG. 20, the first operation pattern F1 includes measuring the position of the nose 52e of the second designated tool 52 using the measurement unit 97.

The first operation pattern F1 may include moving the entire turret E toward the contact surface 971c to bring the nose 52e of the second designated tool 52 into contact with the contact surface 971c of the measurement unit 97. The turret is moved by the moving unit 95 that receives a control command from the controller 2.

In the example depicted in FIG. 20, the measurement unit 97 measures the position of the turret E when the nose 52e of the second designated tool 52 attached to the second designated mounting surface 62 makes contact with the contact surface 971c of the measurement unit 97, to determine the relative position of the nose 52e of the second designated tool 52 relative to the reference position of the turret E. The position of the nose 52e of the second designated tool 52 is thus measured.

In the example depicted in FIG. 14, there are both a designated tool 50 (e.g., first designated tool 51) that is already attached to a specific designated mounting surface 60 (e.g., first designated mounting surface 61), and another designated tool (e.g., second designated tool 52) that is not attached to another specific designated mounting surface (e.g., second designated mounting surface 62) yet. Even in such a case, the turret lathe 1A in the first embodiment allows for efficient measurement of the nose positions of the respective designated tools 50.

In the example depicted in FIG. 14 and FIG. 15, the first designated tool 51 is attached to the first designated mounting surface 61, while the second designated tool 52 is not attached to the second designated mounting surface 62. The turret lathe 1A in the first embodiment, or the tool preparation method according to the first embodiment, are applicable also to other examples. For example, the controller 2 can make the following selections when the plurality of designated tools 50 includes a first designated tool 51 and a second designated tool 52 (in other words, two or more designated tools).

More specifically, as illustrated in FIG. 21, (1) when the result of the first determination processing M1 indicates that the first designated tool 51 is not attached to the first designated mounting surface 61, the controller 2 selects the first operation pattern F1 as the operation pattern for the first designated tool 51, and (2) when the result of the first determination processing M1 indicates that the first designated tool 51 is attached to the first designated mounting surface 61, the controller 2 selects the second operation pattern F2 as the operation pattern for the first designated tool 51.

As illustrated in FIG. 21, (3) when the result of the first determination processing M1 indicates that the second designated tool 52 is not attached to the second designated mounting surface 62, the controller 2 selects the first operation pattern F1 as the operation pattern for the second designated tool 52, and (4) when the result of the first determination processing M1 indicates that the second designated tool 52 is attached to the second designated mounting surface 62, the controller 2 selects the second operation pattern F2 as the operation pattern for the second designated tool 52.

When there is a number t (any natural number of 1, 2, or 3 or more) of designated tools 50 for which the nose position is to be measured, the controller 2 can select a specific operation pattern from a plurality of operation patterns for each designated tool according to the flowchart shown in FIG. 21. The controller 2 may then send control commands to the rotation drive unit 96 and the moving unit 95, so that the selected specific operation pattern is executed for each designated tool according to the flowchart shown in FIG. 21.

### (Indexed mounting position P1)

The indexed mounting position P1 may be set in accordance with the tool type. For example, the memory 3 may store data 351a-1 specifying the first indexed mounting position P1-1 (see FIG. 5) for a first type of tool, and data 351a-3 specifying another indexed mounting position different from the first indexed mounting position P1-1 (hereinafter referred to as "third indexed mounting position P1-3, see FIG. 22) for a second type of tool.

In the example depicted in FIG. 5, the tool type of the designated tool 50 is a first type Ty1. In this case, the first operation pattern F1 includes rotating the turret E about the first axis AX for the designated mounting surface 60 to be brought to the first indexed mounting position P1-1. The first type Ty1 may mean, for example, a specific type of turning tool.

On the other hand, in the example depicted in FIG. 22, the tool type of the designated tool 50 is a second type Ty2. In this case, the first operation pattern F1 includes rotating the turret E about the first axis AX for the designated mounting surface 60 to be brought to a third indexed mounting position P1-3 different from the first indexed mounting position P1-1. The second type Ty2 may mean, for example, a specific type of milling tool.

### (Second determination processing M2)

As illustrated in FIG. 23, the controller 2 may be configured to execute a second determination processing M2 to determine whether or not the nose position of a designated tool 50 has already been measured.

In the example depicted in FIG. 23, the tool preparation method includes executing the second determination processing M2 of determining whether or not the nose position of the designated tool 50 has already been measured. In the example depicted in FIG. 23, the second determination processing M2 is executed after the first determination processing M1 (more specifically, when the result of the first determination processing M1 indicates that the designated tool 50 is attached to the designated mounting surface 60). Alternatively, as illustrated in FIG. 24, the second determination processing M2 may be executed before the first determination processing M1.

In the example depicted in FIG. 23 or FIG. 24, (1) when the result of the second determination processing M2 indicates that the nose position of the designated tool 50 has not been measured yet (result of the second determination processing M2: "No") as well as (2) when the result of the first determination processing M1 indicates that the designated tool 50 is attached to the designated mounting surface 60 (result of the first determination processing M1: "Yes"), the controller 2 selects the second operation pattern F2. The controller 2 also sends control commands to the rotation drive unit 96 and the moving unit 95, so that the selected second operation pattern F2 is executed. In this case, the second operation pattern F2 is not executed to the designated tool 50 whose nose position has already been measured. Thus unnecessary measurement work is avoided.

Since the second operation pattern F2 has already been described, repetitive descriptions regarding the second operation pattern F2 will be omitted.

### (Third operation pattern F3)

In the example depicted in FIG. 23 or FIG. 24, the plurality of operation patterns for the controller 2 to select from includes a third operation pattern F3 that skips measurement of the nose position of the designated tool 50.

In the example depicted in FIG. 23 or FIG. 24, (1) when the result of the second determination processing M2 indicates that the nose position of the designated tool 50 has already been measured (result of the second determination processing M2: "Yes") as well as (2) when the result of the first determination processing M1 indicates that the designated tool 50 is attached to the designated mounting surface 60 (result of the first determination processing M1: "Yes"), the controller 2 selects the third operation pattern F3. The third operation pattern F3 is thus selected to avoid double measurement of the nose position of a designated tool 50 that is already attached to the designated mounting surface 60 and whose nose position has already been measured.

### (Fourth operation pattern F4)

The plurality of operation patterns for the controller 2 to select from may include a fourth operation pattern. The fourth operation pattern F4 is an operation pattern that can be selected when the result of the first determination processing M1 indicates that the designated tool 50 is not attached to the designated mounting surface 60 (result of the first determination processing M1: "No").

In the example depicted in FIG. 25, the fourth operation pattern is an operation pattern that can be selected instead of the first operation pattern F1. For example, the measurement of the nose position of a specific designated tool 50 may be omitted by not selecting the specific designated tool 50 in a second screen Q2 to be described later (in other words, the fourth operation pattern may be selected instead of the first operation pattern F1 for the specific designated tool 50 by not selecting the specific designated tool 50 in the second screen Q2).

The fourth operation pattern includes rotating the turret E about the first axis AX (see FIG. 5) for the designated mounting surface 60 to be brought to the indexed mounting position P1 before the designated tool 50 is attached to the designated mounting surface 60. The turret is rotated by the rotation drive unit 96 that receives a control command from the controller 2. The fourth operation pattern may include moving the entire turret E to bring the designated mounting surface 60 closer to the access opening OP before the designated tool 50 is attached to the designated mounting surface 60 (see FIG. 13).

The fourth operation pattern skips the processing of bringing the designated mounting surface 60 to the indexed position P2 for nose position measurement P2.

The fourth operation pattern that can be selected instead of the first operation pattern F1 increases the number of options for the operator.

### (Measurement of nose position)

As illustrated in FIG. 26, the first operation pattern F1 and second operation pattern F2 may each include measuring the position of the nose 50e of the designated tool 50 (e.g., first designated tool 51 or second designated tool 52) with the measurement unit 97 in a direction (in other words, the z-axis direction) parallel to the first axis AX that is the rotation axis of the turret E (see arrow AR4).

More specifically, the first operation pattern F1 and second operation pattern F2 may each include moving the turret E in a direction parallel to the first axis AX to bring the nose 50e of the designated tool 50 into contact with a first contact surface 971c-1 of the measurement unit 97. The turret is moved by the moving unit 95 that receives a control command from the controller 2. The controller 2 calculates the relative position of the nose 50e of the designated tool 50 relative to the reference position G1 of the turret E in the direction parallel to the first axis AX based on the position of the turret E when the nose 50e of the designated tool 50 makes contact with the first contact surface 971c-1 (in other words, the measurement unit 97 measures the position of the nose 50e of the designated tool 50 in the direction parallel to the first axis AX).

Alternatively, or additionally, the first operation pattern F1 and second operation pattern F2 may each include measuring the position of the nose 50e of the designated tool 50 (e.g., first designated tool 51 or second designated tool 52) with the measurement unit 97 in a direction (more specifically, the x-axis direction) perpendicular to the first axis AX (see arrow AR5).

More specifically, the first operation pattern F1 and second operation pattern F2 may each include moving the turret E in a direction perpendicular to the first axis AX to bring the nose 50e of the designated tool 50 into contact with a second contact surface 971c-2 of the measurement unit 97. The turret is moved by the moving unit 95 that receives a control command from the controller 2. The controller 2 calculates the relative position of the nose 50e of the designated tool 50 relative to the reference position G1 of the turret E in the direction perpendicular to the first axis AX based on the position of the turret E when the nose 50e of the designated tool 50 makes contact with the second contact surface 971c-2 (in other words, the measurement unit 97 measures the position of the nose 50e of the designated tool 50 in the direction perpendicular to the first axis AX).

### (Second embodiment)

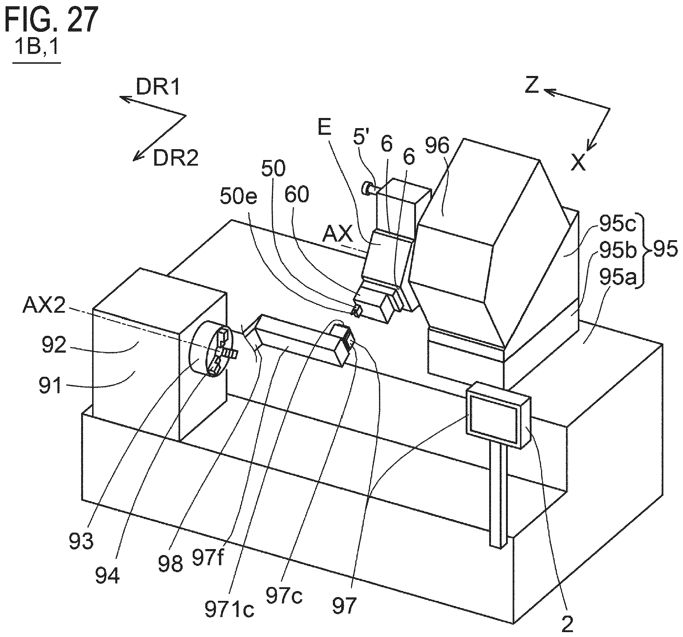

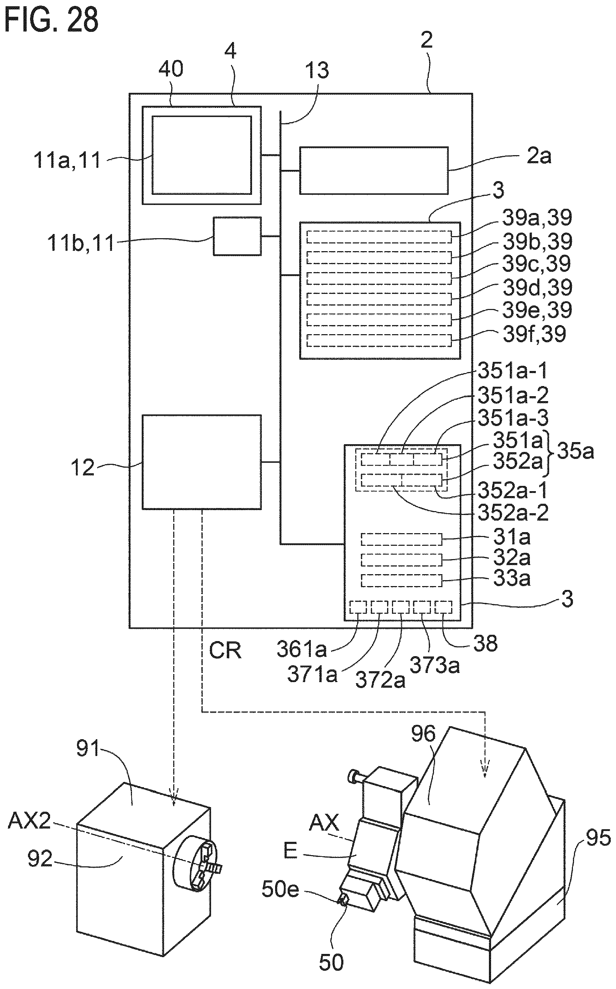

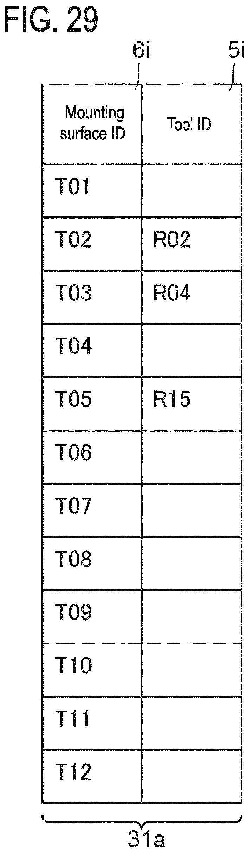

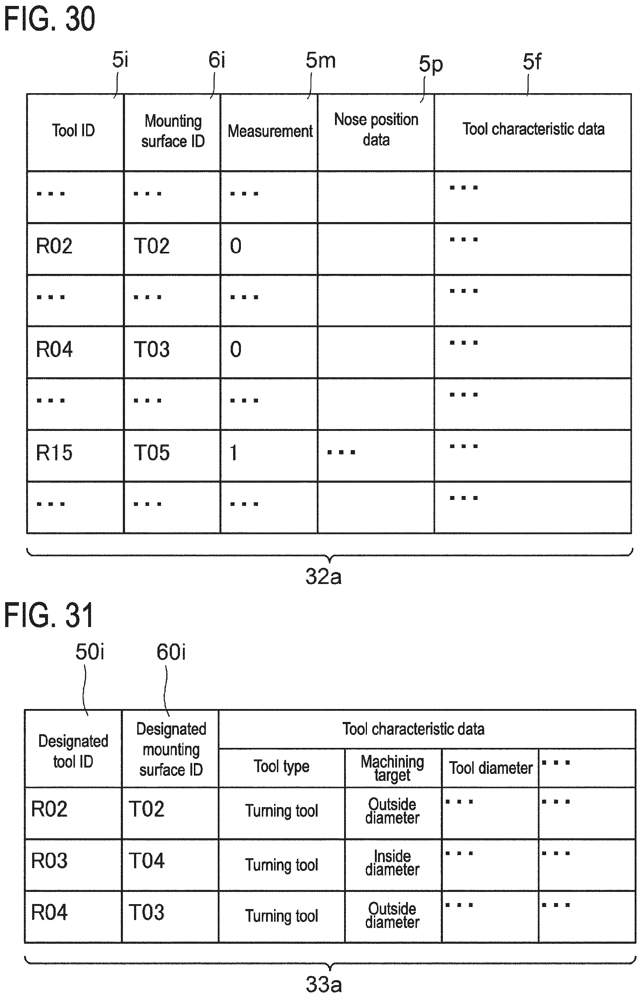

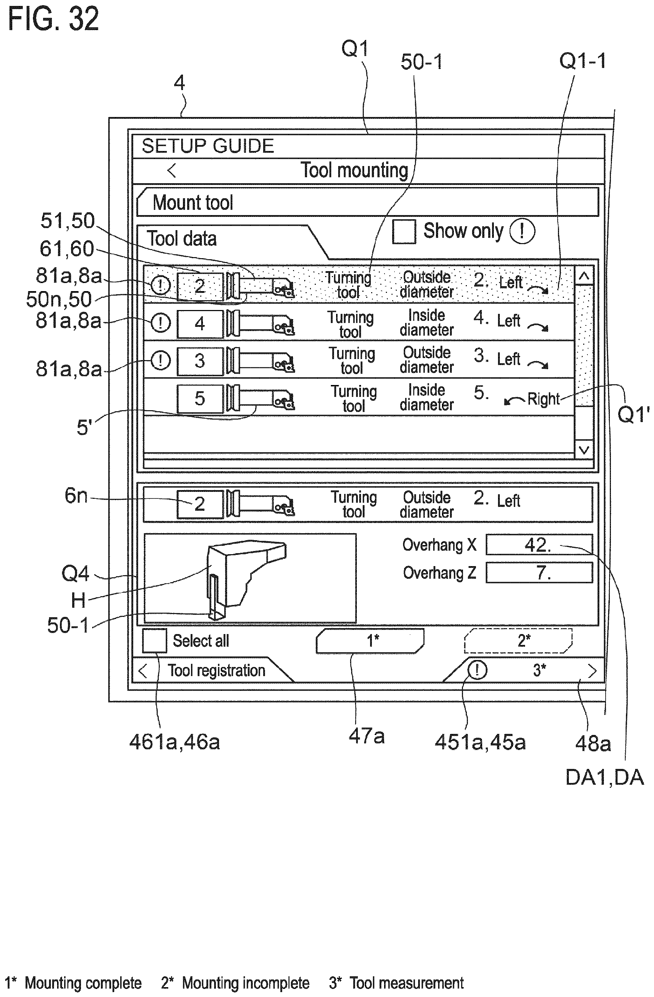

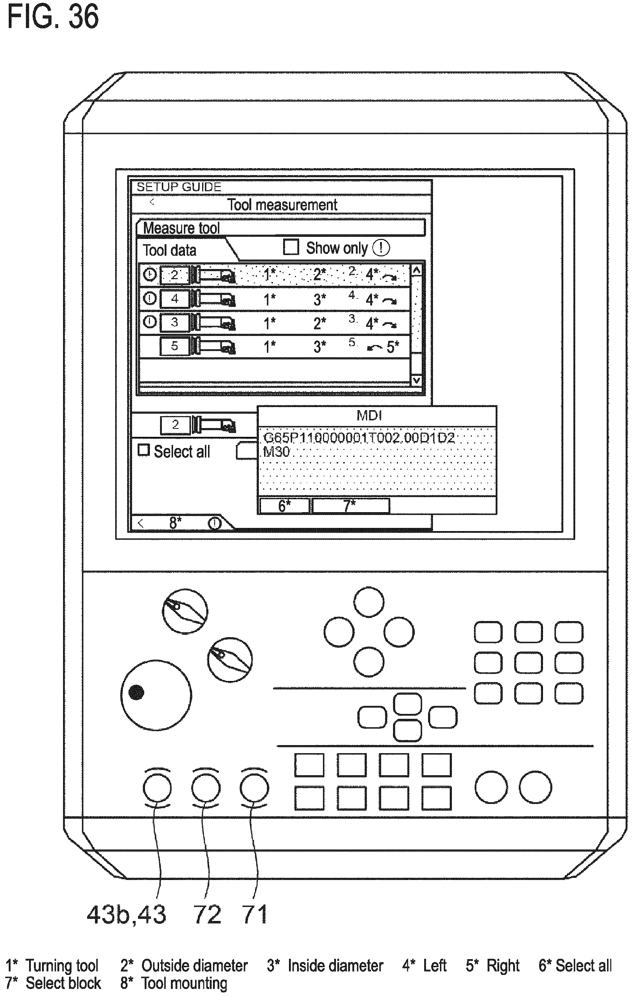

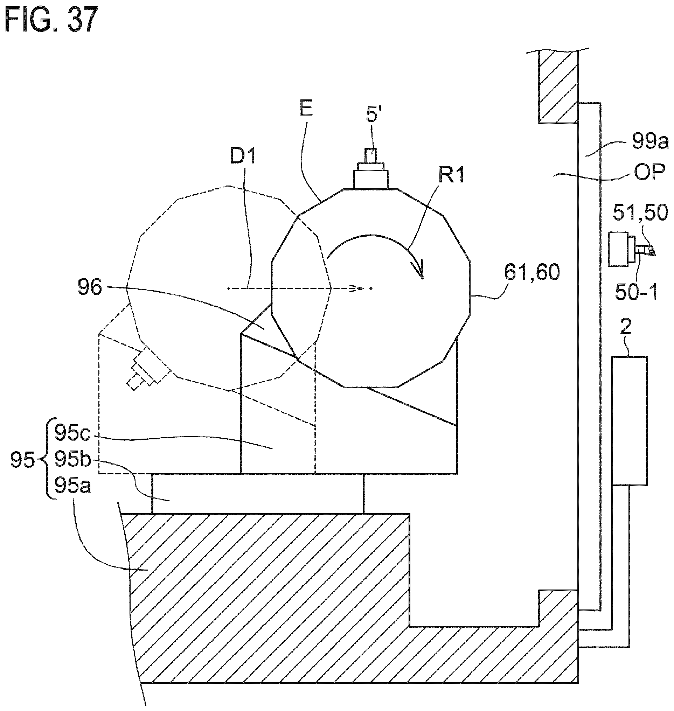

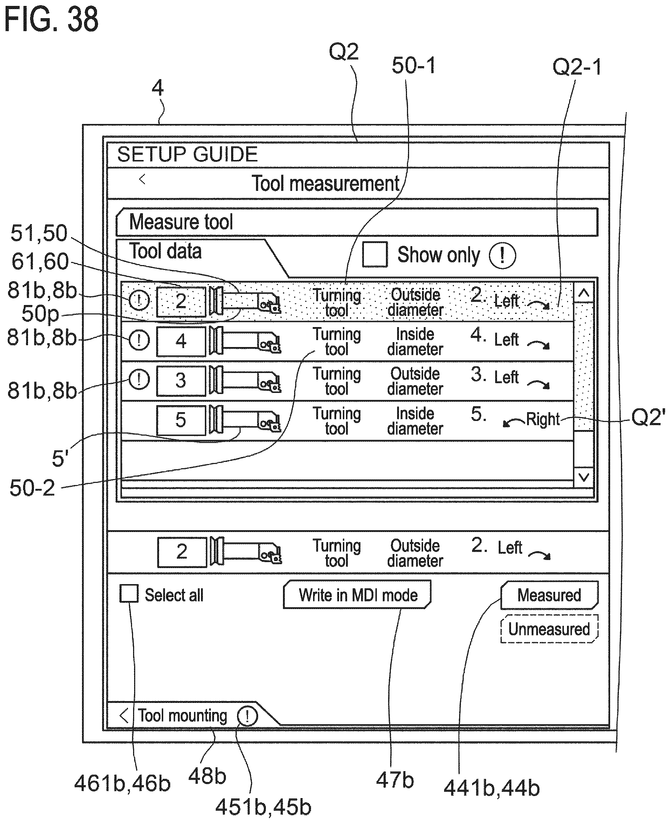

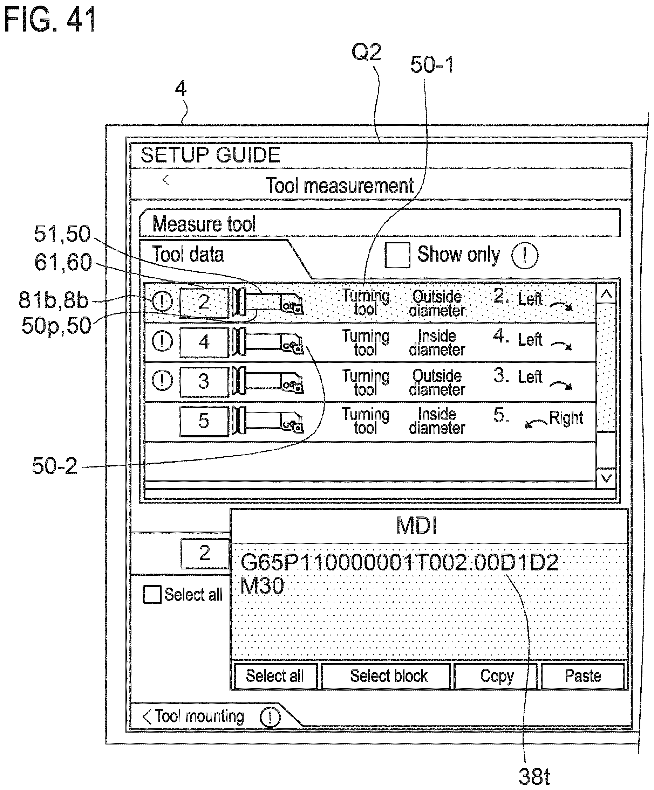

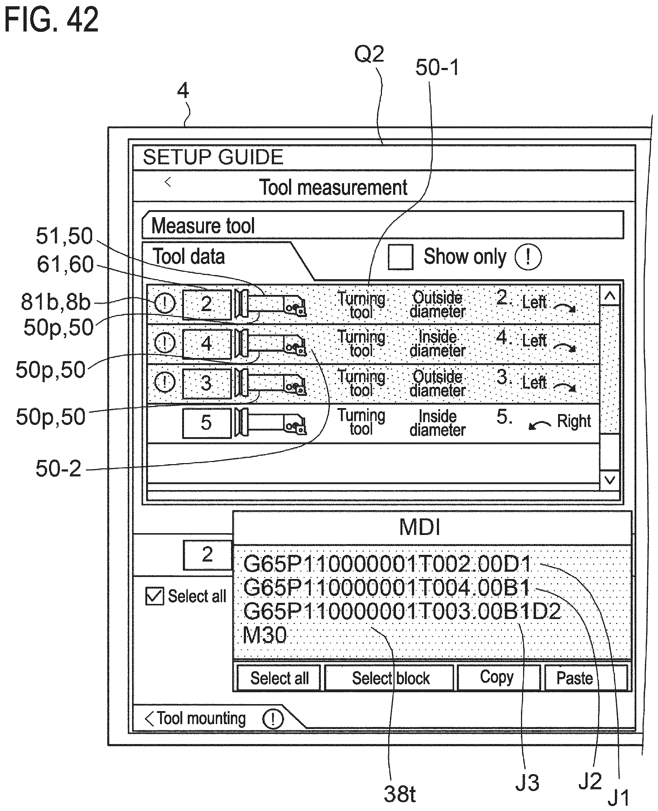

A turret lathe 1B and a tool preparation method in the second embodiment will be described with reference to FIG. 27 to FIG. 43. FIG. 27 is a schematic perspective diagram illustrating the turret lathe 1B in the second embodiment. FIG. 28 is a block diagram illustrating a hardware configuration example of the controller 2. FIG. 29 is a diagram illustrating one example of first data 31a stored in the memory 3. FIG. 30 is a diagram illustrating one example of second data 32a stored in the memory 3. FIG. 31 is a diagram illustrating one example of third data 33a stored in the memory 3. FIG. 32 to FIG. 35 are diagrams each illustrating a first image Q1 shown on the display 4. FIG. 36 is a diagram illustrating one example of an outer look of the controller 2. FIG. 37 is a schematic cross-sectional diagram illustrating one part of the turret lathe 1B in the second embodiment. FIG. 38 to FIG. 40 are diagrams each illustrating a second image Q2 shown on the display 4. FIG. 41 and FIG. 42 are diagrams each illustrating a measurement macro 38t shown on the display 4.

The description of the second embodiment will focus on the features different from the first embodiment. Repetitive descriptions of the matters that have already been described in the first embodiment will be omitted in the second embodiment. It goes without saying that these already described matters of the first embodiment are applicable to the second embodiment even though there is no explicit explanation thereof in the second embodiment. Conversely, all the matters described in the second embodiment are applicable to the first embodiment.

As illustrated in FIG. 27, the turret lathe 1B in the second embodiment includes: (1) a turret E that has a plurality of mounting surfaces 6; (2) a rotation drive unit 96 that rotates the turret E about a first axis AX; (3) a moving unit 95 that moves the turret E; (4) a measurement unit 97 that measures the position of the tool nose; and (5) a controller 2. The controller 2 performs the first determination processing M1 of determining whether or not a designated tool 50 is attached to a designated mounting surface 60 that is one of the plurality of mounting surfaces 6, selects a specific operation pattern from a plurality of operation patterns based on the results of the first determination processing M1, and sends control commands to the rotation drive unit 96 and the moving unit 95 so that the selected operation pattern is executed.

The turret E, rotation drive unit 96, moving unit 95, measurement unit 97, and controller 2 have already been described in the first embodiment, and therefore repetitive descriptions of these elements will be omitted. The first determination processing M1 executed by the controller 2, and the first operation pattern F1 and second operation pattern F2 that can be selected by the controller 2, are the same as the first determination processing M1, first operation pattern F1, and second operation pattern F2 that have been described in the first embodiment. In the case where the controller 2 is able to execute a second determination processing M2, this second determination processing M2 will be the same as the second determination processing M2 that has been described in the first embodiment. Further, in the case where the controller 2 is able to select a third operation pattern F3 (or fourth operation pattern), this third operation pattern (or fourth operation pattern) will be the same as the third operation pattern F3 (or fourth operation pattern F4) that have been described in the first embodiment. Therefore, repetitive descriptions of the first determination processing M1, second determination processing M2, first operation pattern F1, second operation pattern F2, third operation pattern F3, and fourth operation pattern will be omitted in the second embodiment.

The turret lathe 1B in the second embodiment provides the same effects as those of the turret lathe 1A according to the first embodiment.

As illustrated in FIG. 28, the turret lathe 1B in the second embodiment may include the memory 3, display 4, input unit 11, and communication circuit 12. The memory 3, display 4, input unit 11, and communication circuit 12 have already been described in the first embodiment, and therefore repetitive descriptions of these elements will be omitted.

### (Optional or additional configurations)

Next, some optional or additional configurations that may be adopted in the turret lathe 1A of the first embodiment, or the turret lathe 1B of the second embodiment will be described.

### (Moving unit 95)

The moving unit 95 moves the turret E. The moving unit 95 moves the turret E one-dimensionally, two-dimensionally, or three-dimensionally.

In the example depicted in FIG. 27, the moving unit 95 includes a first moving unit 95a that moves the turret E in a first direction DR1 parallel to the horizontal plane. Additionally, the moving unit 95 may include a second moving unit 95b that moves the turret E in a second direction DR2 parallel to the horizontal plane and perpendicular to the first direction DR1. The moving unit 95 may further include a third moving unit 95c that changes the height of the turret E. The moving unit 95 moves the turret E to bring a tool attached to the turret E into contact with a workpiece. Thus the workpiece is machined with the tool. In the example depicted in FIG. 27, the third moving unit 95c moves the turret E in the X-axis direction to change the height of the turret E.

### (Measurement unit 97)

The measurement unit 97 has a block 97c that defines the contact surface 971c for the nose of a tool to touch. The measurement unit 97 calculates the position of the turret E when the nose and the contact surface 971c make contact with each other. This calculation is performed by the controller 2. In other words, the controller 2 configures a part of the measurement unit 97. The controller 2 calculates the relative position of the nose relative to the reference position of the turret E based on the position of the turret E when the nose makes contact with the contact surface 971c (in other words, the controller 2 measures the position of the nose).

In the example depicted in FIG. 27, the turret lathe 1B includes a block moving unit 98 that moves the block 97c of the measurement unit 97. The block moving unit 98 moves the block 97c between an advanced position for measuring the nose position and a retracted position outside the workpiece machining area.

In the example depicted in FIG. 27, the measurement unit 97 is a contact-type measurement device that has the contact surface 971c for the nose to touch. Alternatively, the measurement unit 97 may be a non-contact type measurement device that measures the nose position in a non-contact manner (e.g., by using a camera).

### (Workpiece holder 91)

The turret lathe 1 may include a workpiece holder 91 that holds the workpiece. In the example depicted in FIG. 27, the workpiece holder 91 includes jaws 94 for holding the workpiece, a chuck 93 to which the jaws 94 are mounted, and a rotation drive device 92 that rotates the chuck 93 about a second axis AX2. In the example depicted in FIG. 27, the second axis AX2 (in other words, the Z-axis direction) is parallel to the first direction DR1 mentioned in the foregoing.

### (Machining program 39e)

In the example depicted in FIG. 28, the memory 3 stores a machining program 39e. The machining program 39e is executed by a computer (more specifically, at least one processor 2a included in the controller 2) to control the movement of the tool.

The controller 2 executes the machining program 39e stored in the memory 3 to generate control commands. The generated control commands are sent to various control targets (e.g., the rotation drive unit 96, moving unit 95, rotation drive device 92, etc.) via the communication circuit 12.

The rotation drive unit 96, having received a control command from the controller 2 executing the machining program 39e, rotates the turret E about the first axis AX. The moving unit 95, having received a control command from the controller 2, moves the entire turret E to bring the nose 50e of the designated tool 50 attached to the turret E into contact with the workpiece. The rotation drive device 92, having received a control command from the controller 2 executing the machining program 39e, rotates the workpiece held on the chuck 93 via the jaws 94 about the second axis AX2. The nose 50e of the designated tool 50 moves relative to the workpiece in contact therewith, so that the workpiece is machined.

### (First data 31a)

In the example depicted in FIG. 28, the memory 3 stores first data 31a. The first data 31a is data that associates the mounting surfaces 6 of the turret E with the tools 5 attached to respective mounting surfaces 6. As illustrated in FIG. 29, the first data 31a may associate mounting surface identifiers 6i identifying the mounting surfaces 6 of the turret E with tool identifiers 5i identifying the tools 5 attached to the respective mounting surfaces 6, to associate the mounting surfaces 6 of the turret E with the tools 5 attached to the respective mounting surfaces 6.

### (Second data 32a)

In the example depicted in FIG. 28, the memory 3 stores second data 32a. The second data 32a is data that indicates whether or not the nose positions of the respective tools 5 attached to the turret E have already been measured. In the example depicted in FIG. 30, the second data 32a determines whether or not the nose positions of the respective tools 5 attached to the turret E have already been measured by associating tool identifiers 5i that identify the tools 5 on the respective mounting surfaces 6 with the data 5m that indicates whether or not the nose positions of the tools 5 have already been measured. The second data 32a may include nose position data 5p acquired by measurement with the measurement unit 97. The second data 32a may include tool characteristic data 5f that indicates the characteristics of the tool 5.

### (Third data 33a)

In the example depicted in FIG. 28, the memory 3 stores third data 33a. The third data 33a is data that associates each designated tool 50 with the designated mounting surface 60 on which the designated tool 50 should be mounted. In the example depicted in FIG. 31, the third data 33a associates designated tool identifiers 50i identifying the designated tools 50 with the mounting surface identifiers 60i identifying the designated mounting surfaces 60 on which the designated tools 50 should be mounted, to associate each designated tool 50 with the designated mounting surface 60 on which the designated tool 50 should be mounted. The third data 33a may include tool characteristic data 5f that indicates the characteristics of the designated tool 50.

### (Designated tool 50 and designated mounting surface 60)

The designated tools 50 and the designated mounting surfaces 60 on which the designated tools 50 should be mounted may respectively correspond to the tools specified by the machining program 39e and the mounting surfaces of the turret specified by the machining program 39e. More specifically, the above-described third data 33a may be created based on the machining program 39e.

### (Data 35a that specifies indexed positions)

As illustrated in FIG. 28, the memory 3 may store data 35a that specifies each of the indexed positions. The data 35a includes data 351a that specifies the indexed mounting position P1, and data 352a that specifies the indexed position P2 for nose position measurement. The data 351a that specifies the indexed mounting position P1 may include data 351a-1 that specifies a first indexed mounting position P1-1 (see FIG. 5), data 351a-2 that specifies a second indexed mounting position P1-2 (see FIG. 17), and/or data 351a-3 that specifies a third indexed mounting position P1-3 (see FIG. 22). The data 352a that specifies the indexed position P2 for nose position measurement may include data 352a-1 that specifies a first indexed position P2-1 for nose position measurement (see FIG. 11), and data 352a-2 that specifies a second indexed position P2-2 for nose position measurement (see FIG. 19).

### (Data 361a that specifies first position P9)

As illustrated in FIG. 28, the memory 3 may store data 361a that specifies the first position P9 (see FIG. 13) relatively close to the access opening OP.

### (Other data)

The memory 3 may store tool data 371a, workpiece data 372a (e.g., workpiece shape data, etc.), turret E reference position data 373a (e.g., origin data), and so on.

### (Temporary storage region 38)

The memory 3 may include a temporary storage region 38 that temporarily stores measurement macros 38t and the like generated by the controller 2.

### (Determination program 39a)

In the example depicted in FIG. 28, the memory 3 stores a determination program 39a. The controller 2 executes the determination program 39a to implement the first determination processing M1 described above. For example, the controller 2 executes the first determination processing M1 based on the third data 33a that associates each designated tool 50 with the designated mounting surface 60 on which the designated tool 50 should be mounted, and the first data 31a that associates each mounting surface 6 of the turret E with the tool 5 attached to the mounting surface 6.

The first determination processing M1 includes determining whether or not a designated tool 50 (e.g., first designated tool 51) is attached to a designated mounting surface 60 (e.g., first designated mounting surface 61), which is one of the plurality of mounting surfaces 6. Additionally, where "K" represents any natural number equal to or greater than 2, the first determination processing M1 may include determining whether or not the "K-th" designated tool is attached to the "K-th" designated mounting surface that is one of the plurality of mounting surfaces 6.

The controller 2 may execute the determination program 39a to implement the second determination processing M2 described above. For example, the controller 2 executes the second determination processing M2 described above based on the third data 33a that associates each designated tool 50 with the designated mounting surface 60 on which the designated tool 50 should be mounted, and the second data 32a that indicates whether or not the nose positions of the respective tools 5 attached to the turret E have already been measured.

The second determination processing M2 includes determining whether or not the nose position of a designated tool 50 (e.g., first designated tool 51) has already been measured. Additionally, where "K" represents any natural number equal to or greater than 2, the second determination processing M2 may include determining whether or not the nose position of the "K-th" designated tool has already been measured.

### (Nose position measurement program 39c)

In the example depicted in FIG. 28, the memory 3 stores a nose position measurement program 39c. The nose position measurement program 39c executed by the controller 2 causes the controller 2 to select a specific operation pattern from among a plurality of operation patterns based on the results of the first determination processing M1 (or the results of the first determination processing M1 and second determination processing M2). The nose position measurement program 39c executed by the controller 2 also causes the controller 2 to send control commands to the rotation drive unit 96 and the moving unit 95 via the communication circuit 12, so that the selected specific operation pattern is executed.

### (Display program 39d)

In the example depicted in FIG. 28, the memory 3 stores a display program 39d. The processor 2a of the controller 2 executes the display program 39d to generate a first display command based on the results of the first determination processing M1. The generated first display command is sent to the display 4.

The processor 2a of the controller 2 may execute the display program 39d to generate a second display command based on the results of the second determination processing M2. The generated second display command is sent to the display 4.

### (First image Q1)

As illustrated in FIG. 32, the display 4 shows the first image Q1 in response to receiving the first display command that has been generated based on the results of the first determination processing M1 from the processor 2a. The first image Q1 shows whether or not the designated tool 50 is attached to the designated mounting surface 60.

In the example depicted in FIG. 32, the first image Q1 includes a sub image Q1-1 indicating whether or not the first designated tool 51 is attached to the first designated mounting surface 61. Additionally, where "K" represents any natural number equal to or greater than 2, the first image Q1 may include a sub image indicating whether or not the "K-th" designated tool is attached to the "K-th" designated mounting surface. Moreover, the first image Q1 may include a sub image Q1' indicating which of the mounting surfaces of the turret E has a non-designated tool 5' that is not needed in the next machining processing (in other words, a tool that is not the designated tool) mounted thereon.

Among all the designated tools 50 (e.g., all designated tools to be designated by the machining program 39e), the designated tools 50 before they are attached to the designated mounting surfaces 60 are herein defined as unmounted designated tools 50n. Among all the designated tools 50 (e.g., all designated tools to be designated by the machining program 39e), the designated tools 50 that are attached to the designated mounting surfaces 60 are herein defined as mounted designated tools 50x.

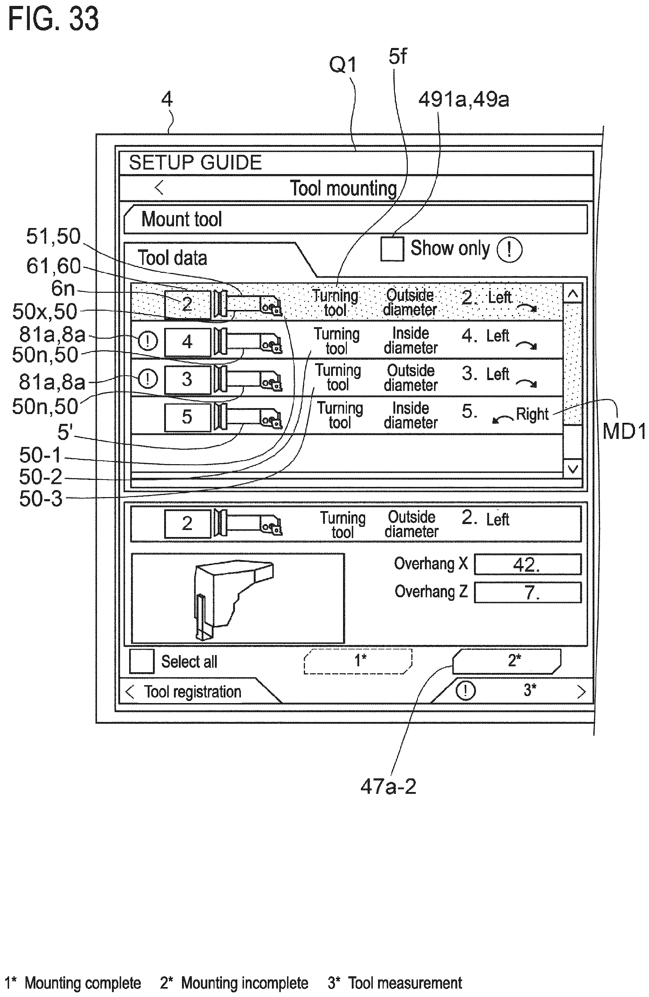

In the example depicted in FIG. 33, of all the designated tools 50, the unmounted designated tools 50n are added with an attention mark 81a (e.g., exclamation mark) in the first image Q1. Of all the designated tools 50, the mounted designated tools 50x are not added with the attention mark 81a in the first image Q1.

In the example depicted in FIG. 33, the operator can recognize whether each designated tool 50 is an unmounted designated tool 50n or a mounted designated tool 50x based on the presence or absence of the attention mark 81a.

In the example depicted in FIG. 33, the first image Q1 includes the attention marks 81a as information 8a that indicates whether or not each designated tool 50 is attached to the designated mounting surface 60. Alternatively, or additionally, the first image Q1 may include some text information or highlighting as the information 8a.

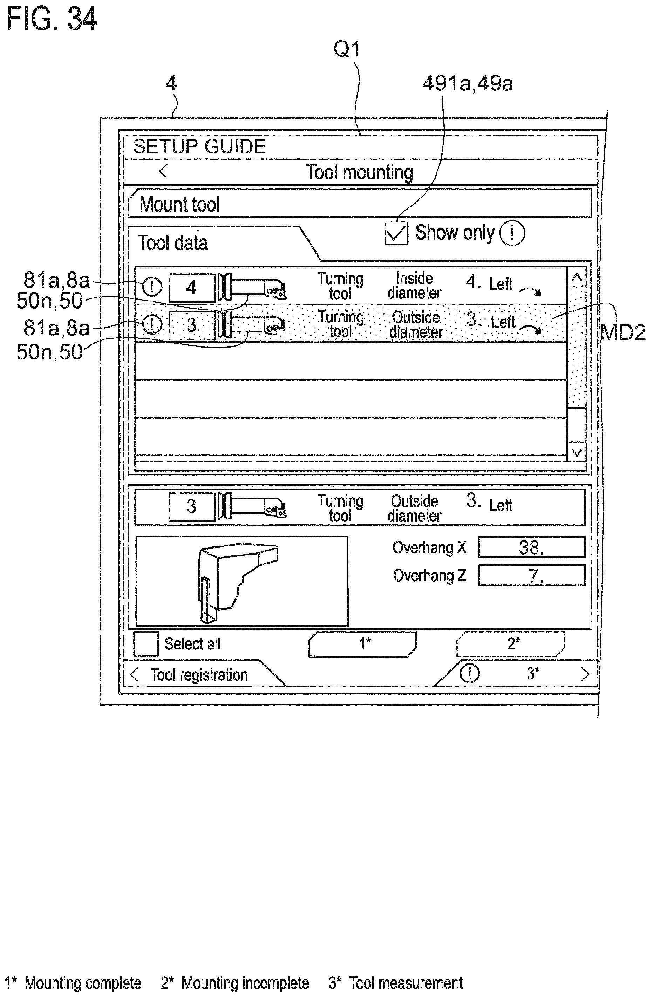

The display 4 may show an image of a switching control 49a (e.g., a check box 491a) in the above-described first image Q1. The controller 2 allows the switching control 49a (e.g., check box 491a) to be operated to toggle the display mode of the first image Q1 between (1) a first display mode MD1 (see FIG. 33) showing all the designated tools 50 and (2) a second display mode MD2 (see FIG. 34) showing all the unmounted designated tools 50n only and not the mounted designated tools 50x.

In the example depicted in FIG. 33, in the above-described first image Q1, each mounting surface 6 of the turret E is associated with: (1) an ID number 6n that identifies the mounting surface 6 of the turret E; (2) the tool characteristic data 5f of a tool 5 that is, or should be, attached to the mounting surface 6; and (3) the information 8a (e.g., attention mark 81a) indicating whether or not the tool 5 is an unmounted designated tool 50n.

In the example depicted in FIG. 32, in the above-described first image Q1, a first tool 50-1 before it is attached to the designated mounting surface 60 is selected. This selection is made via the input unit 11.

In the example depicted in FIG. 32, in response to the selection of the first tool 50-1 in the first image Q1, the controller 2 displays an instruction image Q4 including an instruction to mount the first tool 50-1 on the display 4.

In the case where the instruction image Q4 is shown on the display 4, the operator can mount the first tool 50-1 on the turret E following the instruction. This allows efficient mounting of the first tool 50-1 on the turret E.

In the example depicted in FIG. 32, the instruction image Q4 includes recommended relative position data DA for the first tool 50-1 relative to the tool holding unit H. More specifically, the instruction image Q4 includes a recommended value DA1 of overhang for the first tool 50-1 relative to the tool holding unit H along the longitudinal direction of the first tool 50-1. In this case, the operator can mount the first tool 50-1 on the tool holding unit H such that the first tool 50-1 extends from the tool holding unit H by the recommended value DA1. This allows the operator to efficiently perform the operation of mounting the first tool 50-1 on the tool holding unit H.

As illustrated in FIG. 32, the above-described instruction image Q4 should preferably include the ID number 6n that specifies the designated mounting surface 60 on which the first tool 50-1 should be mounted.

In the example depicted in FIG. 32, the display 4 shows (1) the above-described instruction image Q4 and (2) the above-described first image Q1 (in other words, the first image Q1 indicating whether or not the designated tool 50 is attached to the designated mounting surface 60) at the same time.

### (Tool mounting)

In the example depicted in FIG. 32, the first image Q1 includes an image of Complete button 47a. The Complete button 47a being operated toggles the selected designated tool 50 (e.g., first tool 50-1) from an unmounted designated tool 50n to a mounted designated tool 50x. For example, the operator mounts the first tool 50-1 on the designated mounting surface 60 of the turret E following the instruction shown in the instruction image Q4. The Complete button 47a being operated by the operator after that toggles the first tool 50-1 from an unmounted designated tool 50n to a mounted designated tool 50x in the data (see FIG. 33).

The display 4 may show an image of a Select All control (e.g., check box 461a) for selecting all of the unmounted designated tools 50n in the first image Q1. In this case, the Complete button 47a being operated after all the unmounted designated tools 50 have been collectively selected toggles each of the selected designated tools 50n from an unmounted designated tool 50n to a mounted designated tool 50x in the data.

FIG. 33 shows the screen after the Complete button 47a has been operated.

As illustrated in FIG. 33, the first image Q1 may include an image of Mounting Incomplete button 47a-2. In the example depicted in FIG. 33, the Mounting Incomplete button 47a-2 being operated toggles the designated tool (e.g., first tool 50-1) selected in the first image Q1 from a mounted designated tool 50x to an unmounted designated tool 50n.

For example, the operator removes the first tool 50-1 from the turret E. The Mounting Incomplete button 47a-2 being operated by the operator after that toggles the first tool 50-1 from a mounted tool to an unmounted tool 5 in the data.

### (Mounting assist)

The turret lathe 1 may include an assist feature that brings the designated mounting surface 60 on which an unmounted designated tool 50n should be mounted closer to the operator (in other words, access opening OP). In the example depicted in FIG. 28, the memory 3 stores a mounting assist program 39f.

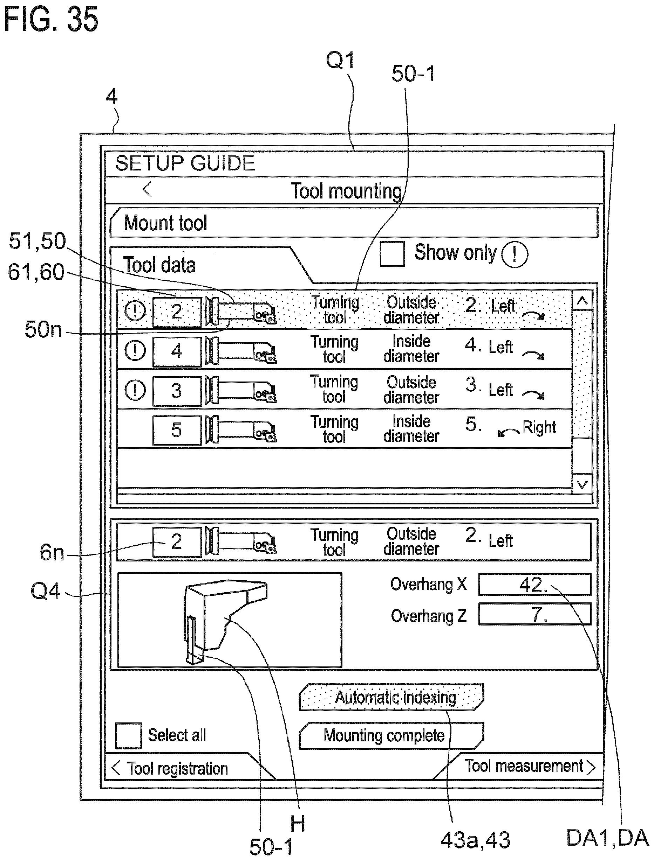

In the example depicted in FIG. 35, the first tool 50-1 before it is attached to the designated mounting surface 60 is selected from a list including at least one designated tool 50 in the first image Q1. In the example depicted in FIG. 35, the controller 2 executes the mounting assist program 39f in response to an operation performed to a Mounting Assist button 43. In the example depicted in FIG. 35, the Mounting Assist button 43 is a software button 43a shown on the display 4 (in other words, a button in the image). The Mounting Assist button 43 may be included in the first image Q1. Alternatively, as illustrated in FIG. 36, the Mounting Assist button 43 may be a hardware button 43b rather than a button in the image.

The controller 2 executes the mounting assist program 39f to generate control commands for moving the designated mounting surface 60 (e.g., first designated mounting surface 61) on which the first tool 50-1 should be mounted toward the access opening OP. The controller 2 sends the generated control commands to the rotation drive unit 95 and the moving unit 96 via the communication circuit 12.

More specifically, the controller 2 executes the mounting assist program 39f to generate a rotation control command. The controller 2 sends the generated rotation control command to the rotation drive unit 96. The rotation drive unit 96 rotates the turret E about the first axis AX (see arrow R1 in FIG. 37) to bring the designated mounting surface 60 (e.g., first designated mounting surface 61) on which the first tool 50-1 should be mounted closer to the access opening OP.

Additionally, the controller 2 executes the mounting assist program 39f to generate a motion control command. The controller 2 sends the generated motion control command to the moving unit 95. The moving unit 95 moves the turret E to bring the entire turret E closer to the access opening OP (see arrow D1 in FIG. 37).

The assist feature described above, if included in the turret lathe 1, allows the operator to mount a designated tool 50 to a designated mounting surface 60 of the turret E more efficiently.

### (Second image Q2)

As illustrated in FIG. 38, the display 4 shows a second image Q2 in response to receiving a second display command that is generated based on the results of the second determination processing M2 from the processor 2a. The second image Q2 indicates whether or not the nose positions of designated tools 50 have already been measured.

In the example depicted in FIG. 38, the second image Q2 includes a sub image Q2-1 indicating whether or not the nose position of the first designated tool 51 has already been measured. Additionally, where "K" represents any natural number equal to or greater than 2, the second image Q2 may include a sub image indicating whether or not the nose position of the "K-th" designated tool has already been measured. Moreover, the second image Q2 may include a sub image Q2' indicating whether or not the nose position of a non-designated tool 5' that is not needed in the next machining processing (in other words, a tool that is not the designated tool) has already been measured.

Among all the designated tools 50 (e.g., all designated tools 50 to be designated by the machining program 39e), the tools before their nose positions are measured are herein defined as unmeasured designated tools 50p. Among all the designated tools 50 (e.g., all designated tools 50 to be designated by the machining program 39e), the tools whose nose positions have already been measured are herein defined as measured designated tools 50y.

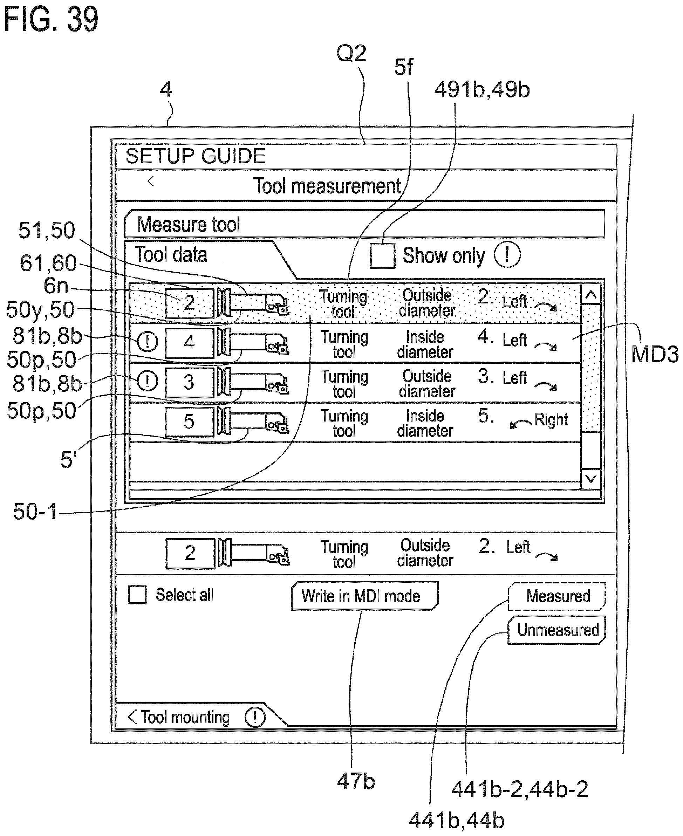

In the example depicted in FIG. 39, of all the designated tools 50, the unmeasured designated tools 50p are added with an attention mark 81b (e.g., exclamation mark) in the second image Q2. Of all the designated tools 50, the measured designated tools 50y are not added with the attention mark in the second image Q2.

In the example depicted in FIG. 39, the operator can recognize whether each designated tool 50 is an unmeasured designated tool 50p or a measured designated tool 50y based on the presence or absence of the attention mark 81b.

In the example depicted in FIG. 39, the second image Q2 includes the attention marks 81b as information 8b that indicates whether or not the nose position of each designated tool 50 has already been measured. Alternatively, or additionally, the second image Q2 may include some text information or highlighting as the information 8b.

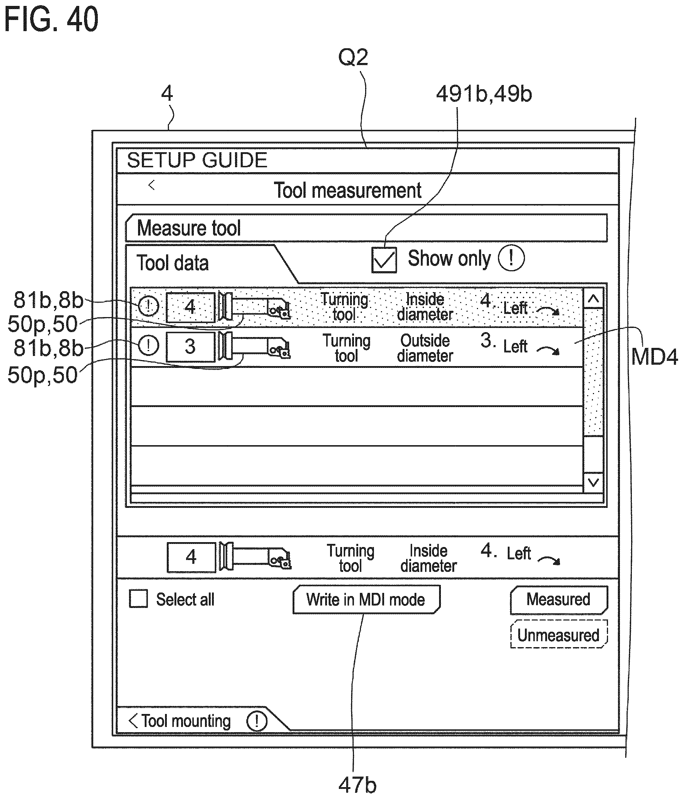

The display 4 may show an image of a switching control 49b (e.g., a check box 491b) in the above-described second image Q2. The controller 2 allows the switching control 49b (e.g., check box 491b) to be operated to toggle the display mode of the second image Q2 between (1) a third display mode MD3 (see FIG. 39) showing all the designated tools 50 and (2) a fourth display mode MD4 (see FIG. 40) showing all the unmeasured designated tools 50p only and not the measured designated tools 50y.

In the example depicted in FIG. 39, in the above-described second image Q2, each mounting surface 6 of the turret E is associated with: (1) an ID number 6n that identifies the mounting surface 6 of the turret E; (2) the tool characteristic data 5f of a tool 5 that is, or should be, attached to the mounting surface 6; and (3) the information 8b (e.g., attention mark 81b) indicating whether or not the tool 5 is an unmeasured designated tool 50p.

As illustrated in FIG. 38, the second image Q2 may include Change control button 44b (e.g., Measured button 441b) that allows a designated tool 50 (e.g., first tool 50-1) selected via the input unit 11 to be changed from an unmeasured designated tool 50p to a measured designated tool 50y. In the example depicted in FIG. 38, the Change control button 44b being operated toggles the designated tool (e.g., first tool 50-1) selected in the second image Q2 from an unmeasured designated tool 50p to a measured designated tool 50y (see FIG. 39). For example, the operator manually measures the nose position of the first tool 50-1. The Change control button 44b being operated by the operator after that toggles the first tool 50-1 from an unmeasured designated tool 50p to a measured designated tool 50y in the data.

In the case where the display 4 shows the Change control button 44b, the operator can select whether to measure the nose position automatically or manually.

As illustrated in FIG. 39, the second image Q2 may include a second Change control button 44b-2 (e.g., Unmeasured button 441b-2) that allows a designated tool 50 (e.g., first tool 50-1) selected via the input unit 11 to be changed from a measured designated tool 50y to an unmeasured designated tool 50p. In the example depicted in FIG. 39, the second Change control button 44b-2 being operated toggles the designated tool 50 (e.g., first tool 50-1) selected in the second image Q2 from a measured designated tool 50y to an unmeasured designated tool 50p.

### (Switching between first image Q1 and second image Q2)

In the example depicted in FIG. 32, in response to receiving the first display command, the display 4 simultaneously shows (1) the first image Q1 indicating whether or not the designated tool 50 is attached to the designated mounting surface 60, and (2) the image of a first control button 48a that allows the first image Q1 to be switched to the second image Q2. In the example depicted in FIG. 38, in response to receiving the second display command, the display 4 simultaneously shows (1) the second image Q2 indicating whether or not the nose position of the designated tool 50 has already been measured, and (2) the image of a second control button 48b that allows the second image Q2 to be switched to the first image Q1.

The first control button 48a and second control button 48b improve the degree of freedom in the operation procedure. For example, the operator can select whether to perform the measurement of nose positions after all the designated tools 50 have been attached to the turret E, or to perform the mounting operation and the nose position measurement continuously for each designated tool.

In the example depicted in FIG. 32 and FIG. 38, the control buttons (48a and 48b) are in the shape of a control tab. Note, however, the designs and shapes of the control buttons shown on the display 4 are not particularly limited herein.

To ensure the degree of freedom in the operation procedure, the processor 2a of the controller 2 should preferably be configured to allow switching of the first image Q1 (see FIG. 32) to the second image Q2 (see FIG. 38) on the display 4 by sending the second display command to the display 4 before all the designated tools 50 are attached to the turret E.

To ensure the degree of freedom in the operation procedure, the processor 2a of the controller 2 should preferably be configured to allow switching of the second image Q2 (see FIG. 38) to the first image Q1 (see FIG. 32) on the display 4 by sending the first display command to the display 4 before all the designated tools 50 are attached to the turret E.

In the example depicted in FIG. 32, in response to receiving the first display command, the display 4 simultaneously shows (1) the first image Q1 described above, (2) the image of the first control button 48a described above, and (3) information 45a (e.g., attention mark 451a) indicating whether or not there is an unmeasured designated tool 50p among all of the designated tools 50. In the example depicted in FIG. 32, the attention mark 451a placed on the first control button 48a indicates that there is an unmeasured designated tool 50p. On the other hand, if there is no attention mark on the first control button 48a, it indicates that there is no unmeasured designated tool 50p.

The above-described information 45a shown on the display 4 allows the operator to recognize if it is necessary to carry out a measurement of the nose position during the operation related to mounting of the tools. In other words, the operator can perform the operations related to the mounting of the tools while being aware of the progress of the preparation operation before the machining of the workpiece.

After the mounting of the designated tool 50 has been completed (e.g., after all of the designated tools 50 have been mounted), the first control button 48a is operated to change the first image Q1 (see FIG. 32) to the second image Q2 (see FIG. 38) on the display 4.

In the example depicted in FIG. 38, in response to receiving the second display command, the display 4 simultaneously shows (1) the second image Q2 described above, (2) the image of the second control button 48b described above, and (3) information 45b (e.g., attention mark 451b) indicating whether or not there is an unmounted designated tool 50n among all of the designated tools 50. In the example depicted in FIG. 38, the attention mark 451b placed on the second control button 48b indicates that there is an unmounted designated tool 50n. On the other hand, if there is no attention mark on the second control button 48b, it indicates that there is no unmounted designated tool 50n.

The above-described information 45b shown on the display 4 allows the operator to recognize if there remains a tool mounting operation to perform during the operation related to the measurement of the nose position.

### (Generation of measurement macro 38t)

In the example depicted in FIG. 28, the memory 3 stores a macro generating program 39b. The controller 2 executes the macro generating program 39b to generate a measurement macro 38t.

More specifically, the controller 2 executes the macro generating program 39b stored in the memory 3 in response to the selection of an unmeasured designated tool 50p (e.g., a first tool 50-1 that is a designated tool whose nose position has not been measured yet) in the second image Q2 (see FIG. 38) as well as an operation performed to the Generate Macro button 47b. The controller 2 executes the macro generating program 39b stored in the memory 3 to generate the measurement macro 38t that is used to measure the nose position of the unmeasured designated tool 50p (e.g., first tool 50-1).

In the example depicted in FIG. 38, the second image Q2 includes an image of the Generate Macro button 47b that is for starting generation of the measurement macro 38t. The Generate Macro button 47b is a button that is used to initiate the writing of a program in MDI (Manual Data Input) format, for example. The measurement macro 38t is a macro incorporated in the nose position measurement program 39c.

In the example depicted in FIG. 38, the Generate Macro button 47b is a software button shown on the display 4 (in other words, a button in the image). Alternatively, the Generate Macro button 47b may be a hardware button rather than a button in the image.

FIG. 41 shows an example of the measurement macro 38t generated upon the Generate Macro button 47b being operated. This measurement macro 38t is stored in a temporary storage region of the memory 3. The measurement macro 38t generated by the controller 2 may be edited via the input unit 11. The editing is performed by the operator.

In FIG. 41, "D1" represents a command for moving the measurement block 97c to its advanced position for measuring the nose position. In FIG. 41, "D2" represents a command for moving the measurement block 97c to its retracted position outside the workpiece machining area. In FIG. 41, "T002" represents a mounting surface of the turret identified by the ID number "2". Therefore, when the nose position measurement program 39c in which the measurement macro 38t shown in FIG. 41 is incorporated is executed by the controller 2, the measurement unit 97 measures the position of the nose of the designated tool 50 (e.g., first tool 50-1) attached to this mounting surface.

The second image Q2 that indicates whether or not the nose positions of designated tools 50 have already been measured (see FIG. 38) should preferably allow selection of a designated tool 50 (e.g., first tool 50-1) that is already attached to a designated mounting surface 60 for which the measurement macro 38t is to be generated, as well as selection of a designated tool (e.g., second tool 50-2) before it is attached to the designated mounting surface 60 for which the measurement macro 38t is to be generated.

When a designated tool 50 (e.g., first tool 50-1) that is already attached to a designated mounting surface 60 is selected in the second image Q2, the measurement macro 38t generated by the controller 2 includes a command for the controller 2 to select the second operation pattern F2 described above. On the other hand, when a designated tool 50 (e.g., second tool 50-2) before it is attached to the designated mounting surface 60 is selected in the second image Q2, the measurement macro 38t generated by the controller 2 includes a command for the controller 2 to select the first operation pattern F1 described above (e.g., code "B1" in FIG. 42).

As illustrated in FIG. 38, the display 4 may show an image of a Select All control 46b (e.g., check box 461b) for selecting all of the unmeasured designated tools 50p in the second image Q2. In this case, the Generate Macro button 47b being operated after all the unmeasured designated tools 50p have been collectively selected initiates generation of the measurement macro 38t (see FIG. 42) to be used to measure the nose positions of all the unmeasured designated tools 50p.

In FIG. 42, the code "B1" indicates the necessity to bring the designated tool 50 to the indexed mounting position P1, in other words, the necessity to mount the designated tool 50 on the designated mounting surface 60 before the measurement of the nose position. In the example depicted in FIG. 42, the mounting surface identified by "T002" is directly brought to the indexed position P2 for nose position measurement (see FIG. 11). Therefore, the nose position of the first designated tool 51 (e.g., first tool 50-1 shown in FIG. 33) that has already been attached to the mounting surface identified by "T002" can be quickly measured.

In the example depicted in FIG. 42, the mounting surface identified by "T004" is first brought to the indexed mounting position P1-2 (see FIG. 17). After the second designated tool 52 has been attached to this mounting surface, the mounting surface is brought to the indexed position P2-2 for nose position measurement (see FIG. 19). Therefore, the second designated tool (e.g., second tool 50-2 shown in FIG. 33) can be readily attached to the mounting surface identified by "T004".

In the example depicted in FIG. 42, the mounting surface identified by "T003" is first brought to the indexed mounting position. After the third designated tool has been attached to this mounting surface, the mounting surface is brought to the indexed position for tool nose position measurement. Therefore, the third designated tool can be readily attached to the mounting surface identified by "T003".

For designated tools whose nose positions have already been measured (in other words, measured designated tools 50y), no measurement macro is needed. Therefore, the second image Q2 shown in FIG. 39 may be configured to not allow selection of a measured designated tool 50y. Alternatively, the measurement macro may include a command to skip measurement of the nose position when a measured designated tool 50y is selected in the second image Q2 (in other words, the measurement macro for measured designated tools 50y may include a command that allows selection of the third operation pattern F3 described above).

### (Start Measurement button 71)

In the example depicted in FIG. 36, the turret lathe 1 (more specifically, the controller 2) includes a Start Measurement button 71. In the example depicted in FIG. 36, the Start Measurement button 71 is a hardware button. Alternatively, the Start Measurement button 71 may be a software button shown on the display 4 (in other words, a button in the image).

Upon the Start Measurement button 71 being operated, the controller 2 executes the nose position measurement program 39c in which the above-described measurement macro 38t is incorporated. In other words, upon the Start Measurement button 71 being operated, a specific operation pattern selected by the controller from a plurality of operation patterns is executed.

More specifically, the controller 2 that executes the nose position measurement program 39c selects a specific operation pattern from among a plurality of operation patterns based on the results of the first determination processing M1 (or the results of the first determination processing M1 and second determination processing M2). The controller also sends control commands to the rotation drive unit 96 and the moving unit 95, so that the selected specific operation pattern is executed.

### (When first operation pattern F1 is selected)

The controller 2 selects a specific operation pattern from among a plurality of operation patterns based on the results of the first determination processing M1 (more specifically, based on the measurement macro 38t generated based on the results of the first determination processing M1). When the first operation pattern F1 is selected as the specific operation pattern, the controller 2 sends control commands to the rotation drive unit 96 and the moving unit 95 so that the first operation pattern F1 is executed.

As illustrated in FIG. 4 and FIG. 5, the first operation pattern F1 includes rotating the turret E about the first axis AX for the designated mounting surface 60 to be brought to an indexed mounting position P1 before the designated tool 50 is attached to the designated mounting surface 60. The turret is rotated by the rotation drive unit 96 that receives a control command (e.g., first rotation control command) from the controller 2.

Additionally, as illustrated in FIG. 13, the first operation pattern F1 may include moving the entire turret E to bring the designated mounting surface 60 closer to the access opening OP before the designated tool 50 is attached to the designated mounting surface 60. The turret is moved by the moving unit 95 that receives a control command (e.g., first movement command) from the controller 2.

Additionally, as illustrated in FIG. 5, the controller 2 may present an image Q3 (see FIG. 6) on the display 4 prompting to mount the designated tool 50 in response to the designated mounting surface 60 having reached the indexed mounting position P1 during the execution of the first operation pattern F1. Since the image Q3 prompting to mount the designated tool 50 has already been described, repetitive description of the image Q3 will be omitted.

Such an image Q3 prompting to mount the designated tool 50, when presented on the display 4 during the execution of the first operation pattern F1, helps the operator mount the designated tool 50 on the designated mounting surface 60 at the appropriate times. As illustrated in FIG. 6, the display 4 may show a Mounting Complete button 41 (e.g., OK button 411). The unmounted designated tool 50n may be changed to a mounted designated tool 50x in the first image Q1 (see FIG. 32) shown on the display 4 upon the Mounting Complete button 41 being operated.

FIG. 7 shows the state after the designated tool 50 has been attached to the designated mounting surface 60. As illustrated in FIG. 36, the turret lathe 1 (more specifically, the controller 2) may include a Resume button 72. Upon the Resume button 72 being operated, the rotation drive unit 96 and the moving unit 95 are restarted. For example, upon the Resume button 72 being operated, the turret E rotates about the first axis so that the designated mounting surface 60 moves from the indexed mounting position P1 to the indexed position P2 for nose position measurement (see FIG. 8).

The Resume button 72 may be the same button as the Start Measurement button 71, or a different button from the Start Measurement button 71. The Resume button 72 may be a hardware button, or a software button.

As illustrated in FIG. 8, the first operation pattern F1 includes rotating the turret E about the first axis AX for the designated mounting surface 60 to be brought to an indexed position P2 for nose position measurement after the designated tool 50 has been attached to the designated mounting surface 60. The turret is rotated by the rotation drive unit 96 that receives a control command (e.g., second rotation control command) from the controller 2.

The first operation pattern F1 includes measuring the position of the nose 50e of the designated tool 50 with the measurement unit 97. The operation of measuring the position of the nose 50e has already been described in the first embodiment, and therefore repetitive descriptions of this operation will be omitted.

After the nose position of the designated tool 50 has been measured, the nose position data of this designated tool 50 is stored in the memory 3 (see FIG. 30). The controller 2 changes this designated tool 50 from an unmeasured designated tool 50p to a measured designated tool 50y in the data.

### (When second operation pattern F2 is selected)

The controller 2 selects a specific operation pattern from among a plurality of operation patterns based on the results of the first determination processing M1 (more specifically, based on the measurement macro 38t generated based on the results of the first determination processing M1). When the second operation pattern F2 is selected as the specific operation pattern, the controller 2 sends control commands to the rotation drive unit 96 and the moving unit 95 so that the second operation pattern F2 is executed.

As illustrated in FIG. 10 and FIG. 11, the second operation pattern F2 includes rotating the turret E about the first axis AX for the designated mounting surface 60 with the designated tool 50 mounted thereon to be directly brought to the indexed position P2 for nose position measurement. The turret is rotated by the rotation drive unit 96 that receives a control command from the controller 2.

The second operation pattern F2 includes measuring the position of the nose 50e of the designated tool 50 with the measurement unit 97. The operation of measuring the position of the nose 50e has already been described in the first embodiment, and therefore repetitive descriptions of this operation will be omitted.

After the nose position of the designated tool 50 has been measured, the nose position data of this designated tool 50 is stored in the memory 3 (see FIG. 30). The controller 2 changes this designated tool 50 from an unmeasured designated tool 50p to a measured designated tool 50y in the data.

### (When third operation pattern F3 is selected)

When the result of the second determination processing M2 indicates that the nose position of the designated tool 50 has already been measured, and when the result of the first determination processing M1 indicates that the designated tool 50 is attached to the designated mounting surface 60, the controller 2 selects the third operation pattern F3.

The third operation pattern skips the measurement of the nose position of the designated tool 50. In other words, the controller 2 does not generate a control command to measure the nose position of the designated tool 50, and executes control that is required next (e.g., control related to a next designated tool).

### (Tool preparation method)

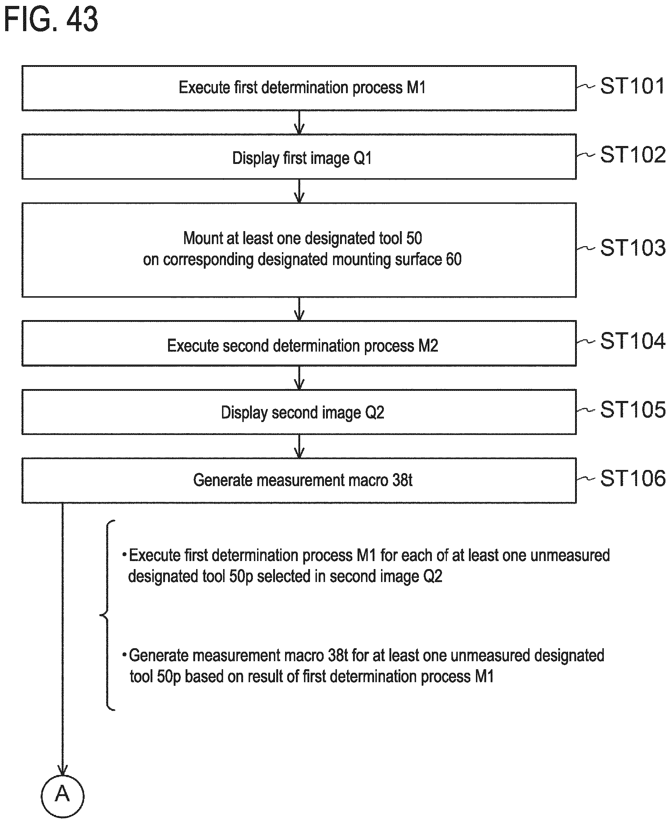

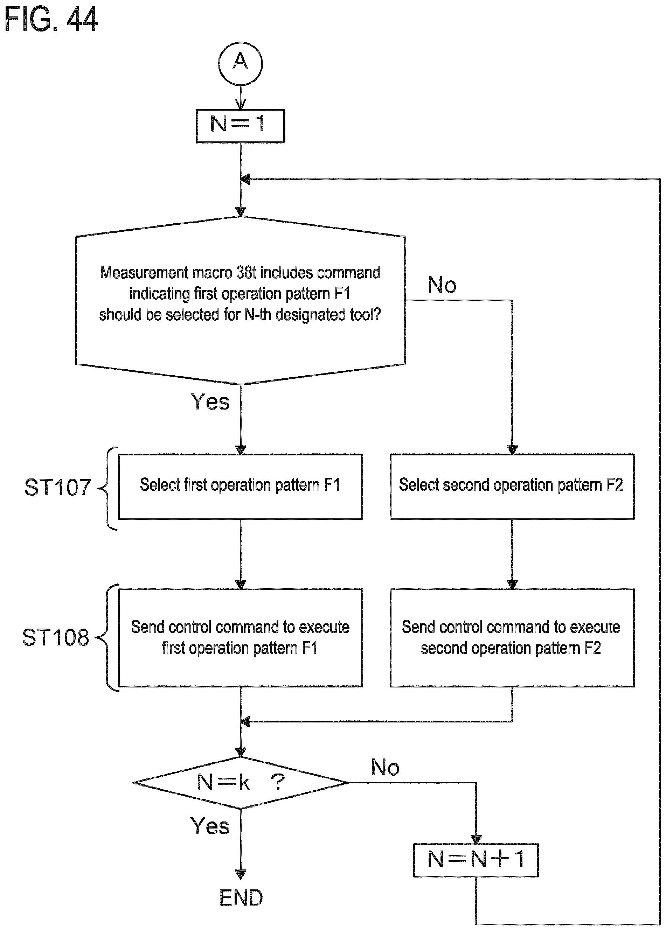

A tool preparation method in the second embodiment will be described with reference to FIG. 1 to FIG. 44. FIG. 43 and FIG. 44 are flowcharts showing one example of the tool preparation method in the second embodiment.

The tool preparation method in the second embodiment is carried out using the turret lathe 1A in the first embodiment, or the turret lathe 1B in the second embodiment, or any other turret lathes. The turret lathe 1A in the first embodiment and the turret lathe 1B in the second embodiment have already been described, and therefore repetitive descriptions of the turret lathe 1A in the first embodiment and the turret lathe 1B in the second embodiment will be omitted.

In the first step ST101, the first determination processing M1 is executed. The first step ST101 is a first determination step. In the first determination step (or the first determination processing M1), it is determined whether or not a designated tool 50 is attached to the designated mounting surface 60, which is one of the plurality of mounting surfaces 6 of the turret E. This determination is made by the controller 2. For example, the controller 2 executes the first determination processing M1 based on the third data 33a (see FIG. 31) that associates each designated tool 50 with the designated mounting surface 60 on which the designated tool 50 should be mounted, and the first data 31a (see FIG. 29) that associates each mounting surface 6 of the turret E with the tool 5 attached to the mounting surface 6.

The first determination processing M1 includes determining whether or not the first designated tool 51 is attached to the first designated mounting surface 61 that is one of the plurality of mounting surfaces 6 of the turret E. Additionally, where "K" represents any natural number equal to or greater than 2, the first determination processing M1 may include determining whether or not the "K-th" designated tool is attached to the "K-th" designated mounting surface that is one of the plurality of mounting surfaces 6 of the turret E.

The processor 2a of the controller 2 generates a first display command based on the results of the first determination processing M1. The generated first display command is sent to the display 4.

As illustrated in FIG. 32, the display 4 shows the first image Q1 in the second step ST102 in response to receiving the first display command. The first image Q1 is an image created based on the results of the first determination processing M1. The first image Q1 is an image that indicates whether or not the designated tool 50 is attached to the designated mounting surface 60. Since the first image Q1 has already been described, repetitive descriptions regarding the first image Q1 will be omitted.

Additionally, in the second step ST102, the display 4 may show an instruction image Q4 including an instruction to mount the designated tool 50 that was selected in the first image Q1.

In the third step ST103, at least one designated tool 50 is attached to the corresponding designated mounting surface 60. In the third step ST103, when a designated tool 50 is attached to a designated mounting surface 60 (more specifically, when the Complete button 47a is operated in the first image Q1), the controller 2 executes the first determination processing M1 again, and updates the result of the first determination processing M1. The display 4 updates the first image Q1 in accordance with the updated results.

In the third step ST103, no designated tool 50 may be attached to the designated mounting surface 60 at all.

In the fourth step ST104, the second determination processing M2 is executed. The fourth step ST104 is a second determination step. In the second determination step (or the second determination processing M2), it is determined whether or not the nose position of the designated tool 50 has already been measured. This determination is made by the controller 2. For example, the controller 2 executes the second determination processing M2 described above based on the third data 33a (see FIG. 31) that associates each designated tool 50 with the designated mounting surface 60 on which the designated tool 50 should be mounted, and the second data 32a (see FIG. 30) that indicates whether or not the nose positions of the respective tools 5 attached to the turret E have already been measured.

The second determination processing M2 includes determining whether or not the nose position of the first designated tool 51 has already been measured. Additionally, where "K" represents any natural number equal to or greater than 2, the second determination processing M2 may include determining whether or not the nose position of the "K-th" designated tool has already been measured.

The processor 2a of the controller 2 generates a second display command based on the results of the second determination processing M2. The generated second display command is sent to the display 4.

As illustrated in FIG. 38, the display 4 shows the second image Q2 in the fifth step ST105 in response to receiving the second display command. The second image Q2 is an image created based on the results of the second determination processing M2. The second image Q2 is an image that indicates whether or not the nose positions of designated tools 50 have already been measured. Since the second image Q2 has already been described, repetitive descriptions regarding the second image Q2 will be omitted.

In the sixth step ST106, a measurement macro 38t is generated, which is to be used to measure the nose position of at least one unmeasured designated tool 50p. The sixth step ST106 is a macro generation step. The macro generation step includes (1) the controller 2 executing a determination processing of determining whether or not each of at least one unmeasured designated tool 50p that was selected in the second image Q2 is attached to the corresponding designated mounting surface 60 (in other words, executing the first determination processing M1 described above), and (2) the controller 2 generating a measurement macro 38t for the at least one unmeasured designated tool 50p that was selected in the second image Q2 based on the results of the determination processing.

In the example depicted in FIG. 33, the first designated tool 51 (more specifically, the first tool 50-1) is already attached to the first designated mounting surface 61, for example. In this case, as illustrated in FIG. 42, the measurement macro 38t generated by the controller 2 includes a command J1 indicating that the second operation pattern F2 should be selected as the operation pattern for the first designated tool 51 (more specifically, a command without the code "B1").

In the example depicted in FIG. 33, the second designated tool (more specifically, the second tool 50-2) is not attached to the second designated mounting surface (see the attention mark 81a). In this case, as illustrated in FIG. 42, the measurement macro 38t generated by the controller 2 includes a command J2 indicating that the first operation pattern F1 should be selected as the operation pattern for the second designated tool (more specifically, a command including the code "B1").

In the example depicted in FIG. 33, the third designated tool (more specifically, the third tool 50-3) is not attached to the third designated mounting surface (see the attention mark 81a). In this case, as illustrated in FIG. 42, the measurement macro 38t generated by the controller 2 includes a command J3 indicating that the first operation pattern F1 should be selected as the operation pattern for the third designated tool (more specifically, a command including the code "B1").

In the seventh step ST107, the controller 2 selects a specific operation pattern from among a plurality of operation patterns based on the results of the first determination processing M1 (more specifically, based on the measurement macro 38t generated based on the results of the first determination processing M1). The seventh step ST107 in the second embodiment corresponds to the second step ST2 in the first embodiment. The seventh step ST107 is a selection step.

In the eighth step ST108, the controller 2 sends control commands to the rotation drive unit 96 and the moving unit 95, so that the selected specific operation pattern is executed.

The seventh step ST107 and the eighth step ST108 are repeatedly executed for the number of the unmeasured designated tools 50p that were selected in the second image Q2. For example, when the number of the unmeasured designated tools 50p that were selected in the second image Q2 is "k", the seventh step ST107 and the eighth step ST108 are repeated k times as illustrated in FIG. 44.

One example of a case where the nose position measurement program 39c including the measurement macro 38t shown in FIG. 42 incorporated therein is executed will be described. In FIG. 44, when N = 1, the controller 2 selects the second operation pattern F2 from among a plurality of operation patterns as the operation pattern for the first designated tool 51 based on the results of the first determination processing M1 (more specifically, based on the command J1 in the measurement macro 38t) in the seventh step ST107. In the eighth step ST108, the controller 2 sends control commands to the rotation drive unit 96 and the moving unit 95 so that the second operation pattern F2 is executed as the operation pattern for the first designated tool 51. Since the second operation pattern F2 has already been described in the first or second embodiment, repetitive descriptions regarding the second operation pattern F2 will be omitted.

In FIG. 44, when N = 2, the controller 2 selects the first operation pattern F1 from among a plurality of operation patterns as the operation pattern for the second designated tool based on the results of the first determination processing M1 (more specifically, based on the command J2 in the measurement macro 38t) in the seventh step ST107. In the eighth step ST108, the controller 2 sends control commands to the rotation drive unit 96 and the moving unit 95 so that the first operation pattern F1 is executed as the operation pattern for the second designated tool. Since the first operation pattern F1 has already been described in the first or second embodiment, repetitive descriptions regarding the first operation pattern F1 will be omitted.

In FIG. 44, when N = 3, the controller 2 selects the first operation pattern F1 from among a plurality of operation patterns as the operation pattern for the third designated tool based on the results of the first determination processing M1 (more specifically, based on the command J3 in the measurement macro 38t) in the seventh step ST107. In the eighth step ST108, the controller 2 sends control commands to the rotation drive unit 96 and the moving unit 95 so that the first operation pattern F1 is executed as the operation pattern for the third designated tool.

The tool preparation method in the second embodiment provides the same effects as the tool preparation method according to the first embodiment. Images such as the first image Q1 and second image Q2, etc., are displayed in the second embodiment, so that the operator can perform the operations in accordance with the contents of the images. In the second embodiment, a measurement macro 38t is generated for at least one unmeasured designated tool 50p that has been selected, and this measurement macro 38t is incorporated in the nose position measurement program 39c. Therefore, the operator does not have to edit the nose position measurement program 39c each time. Moreover, when a measurement macro 38t is generated for two or more unmeasured designated tools 50p as illustrated in FIG. 42, the nose positions of two or more unmeasured designated tools 50p can be measured using one measurement macro 38t. This also means that the nose positions of two or more unmeasured designated tools 50p can be measured in sequence using one measurement macro 38t.

Obviously, the present invention is not limited to the various embodiments and modifications described above, and these embodiments or modifications thereof can be modified or changed as required within the scope of the technical concept of the present invention. Various techniques used in respective embodiments or modifications thereof may be applied to other embodiments or modifications as long as there are no technical contradictions. Optional or additional features in various embodiments and modifications can be omitted as suited.

### Reference Signs List

1, 1A, 1B ... Turret lathe, 2 ... Controller, 2a ... Processor, 3 ... Memory, 4 ... Display, 5... Tool, 5f ... Tool characteristic data, 5i ... Tool identifier, 5m ... Data indicating whether or not the nose position of a tool has already been measured, 5p ... Nose position data, 5' ... Non-designated tool, 6 ... Mounting surface, 6i ... Mounting surface identifier, 6n ... ID number that identifies a mounting surface of the turret, 8a ... Information indicating whether or not each designated tool is attached to a designated mounting surface, 8b ... Information indicating whether or not the nose position of each designated tool has been measured, 11, 11a, 11b ... Input unit, 12 ... Communication circuit, 13 ... Bus, 31a ... First data, 32a ... Second data, 33a ... Third data, 35a ... Data that specifies each of several indexed positions, 38 ... Temporary storage region, 38t ... Measurement macro, 39 ... Program, 39a ... Determination program, 39b ... Macro generating program, 39c ... Nose position measurement program, 39d ... Display program, 39e ... Machining program, 39f ... Mounting assist program, 40 ... Display with touchscreen, 41 ... Mounting Complete button, 43 ... Mounting Assist button, 43a ... Software button, 43b ... Hardware button, 44b ... Change control button, 44b-2 ... Second change control button, 45a ... Information indicating whether or not there is an unmeasured designated tool, 45b ... Information indicating whether or not there is an unmounted designated tool, 46a, 46b ... Select All control, 47a ... Mounting Complete button, 47a-2 ... Mounting Incomplete button, 47b ... Generate Macro button, 48a ... First control button, 48b ... Second control button, 49a, 49b ... Switching control, 50 ... Designated tool, 50-1... First tool, 50-2... Second tool, 50-3... Third tool, 50e ... Nose of designated tool, 50i ... Designated tool identifier, 50n ... Unmounted designated tool, 50p ... Unmeasured designated tool, 50x ... Mounted designated tool, 50y ... Measured designated tool, 51 ... First designated tool, 51e ... Nose of first designated tool, 52 ... Second designated tool, 52e ... Nose of second designated tool, 60 ... Designated mounting surface, 60i ... Designated mounting surface identifier, 61 ... First designated mounting surface, 62 ... Second designated mounting surface, 63 ... Third designated mounting surface, 71 ... Start Measurement button, 72 ... Resume button, 81a, 81b ... Attention mark, 91 ... Workpiece holder, 92 ... Rotation drive device, 93 ... Chuck, 94 ... Jaw, 95 ... Moving unit, 95a ... First moving unit, 95b ... Second moving unit, 95c ... Third moving unit, 96 ... Rotation drive unit, 97 ... Measurement unit, 97c ... Block, 97f ... Arm, 98 ... Block moving unit, 99a ... Door, 99b ... Door moving unit, 351a, 351a-1, 351a-2, 351a-3 ... Data that specifies indexed positions, 352a, 352a-1, 352a-2 ... Data that specifies indexed position for tool nose position measurement, 361a ... Data that specifies first position, 371a ... Tool data, 372a ... Workpiece data, 373a ... Reference position data, 411 ... OK button, 441b ... Measured button, 441b-2 ... Unmeasured button, 451a, 451b ... Attention mark, 461a, 461b, 491a, 491b ... Check box, 971c ... Contact surface, 971c-1 ... First contact surface, 971c-2 ... Second contact surface, B ... Tool, Be ... Nose, DA, DT ... Recommended relative position data, DA1, DT1 ... Recommended value, E ... Turret, G1 ... Reference position, H ... Tool holding unit, MG ... Message, OP ... Access opening, Q1 ... First image, Q1-1, Q1' ... Sub image, Q2 ... Second image, Q2-1, Q2' ... Sub image, Q3 ... Image prompting to mount a designated tool, Q4 ... Instruction image

## Claims

1. A turret lathe comprising:
a turret including a plurality of mounting surfaces;
a rotation drive unit configured to rotate the turret about a first axis;
a moving unit configured to move the turret;
a measurement unit configured to measure a position of a tool nose; and
a controller configured to execute a first determination processing of determining whether or not a designated tool is attached to a designated mounting surface that is one of the plurality of mounting surfaces, to select a specific operation pattern from a plurality of operation patterns based on a result of the first determination processing, and to send a control command to the rotation drive unit and the moving unit so that the selected operation pattern is executed,
the plurality of operation patterns at least including
a first operation pattern to be executed when the result of the first determination processing indicates that the designated tool is not attached to the designated mounting surface, and
a second operation pattern to be executed when the result of the first determination processing indicates that the designated tool is attached to the designated mounting surface,
the first operation pattern including
rotating the turret about the first axis for the designated mounting surface to be brought to an indexed mounting position before the designated tool is attached to the designated mounting surface,
rotating the turret about the first axis for the designated mounting surface to be brought to an indexed position for tool nose position measurement after the designated tool has been attached to the designated mounting surface, and
measuring a nose position of the designated tool using the measurement unit,
the second operation pattern including
rotating the turret about the first axis for the designated mounting surface with the designated tool mounted thereon to be directly brought to the indexed position for tool nose position measurement, and
measuring a nose position of the designated tool using the measurement unit.

2. The turret lathe according to claim 1, further comprising a door configured to close an access opening that allows an operator to access the turret,
wherein the first operation pattern includes moving the turret in its entirety for the designated mounting surface to come closer to the access opening before the designated tool is attached to the designated mounting surface.

3. The turret lathe according to claim 1 or 2, wherein, when the designated tool includes a plurality of designated tools including a first designated tool attached to a first designated mounting surface, with its nose position not measured yet, and a second designated tool before being attached to a second designated mounting surface, with its nose position not measured yet, the controller sends the control command to the rotation drive unit and the moving unit so that the first operation pattern and the second operation pattern are both executed,
the second operation pattern including
rotating the turret about the first axis for the first designated mounting surface with the first designated tool mounted thereon to be directly brought to a first indexed position for tool nose position measurement, and
measuring a nose position of the first designated tool using the measurement unit,
the first operation pattern including
rotating the turret about the first axis for the second designated mounting surface to be brought to a second indexed mounting position,
rotating the turret about the first axis for the second designated mounting surface to be brought to a second indexed position for tool nose position measurement after the second designated tool has been attached to the second designated mounting surface, and
measuring a nose position of the second designated tool using the measurement unit.

4. The turret lathe according to any one of claims 1 to 3,
wherein, when the designated tool is a first type of tool, the first operation pattern includes rotating the turret about the first axis for the designated mounting surface to be brought to a first indexed mounting position, and
wherein when the designated tool is a second type of tool, the first operation pattern includes rotating the turret about the first axis for the designated mounting surface to be brought to another indexed mounting position that is different from the first indexed mounting position.

5. The turret lathe according to any one of claims 1 to 4,
wherein the controller is configured to execute a second determination processing of determining whether or not a nose position of the designated tool has already been measured, and
wherein when a result of the second determination processing indicates that the nose position of the designated tool has not been measured yet, as well as the result of the first determination processing indicates that the designated tool is attached to the designated mounting surface, the controller selects the second operation pattern.

6. The turret lathe according to claim 5,
wherein the plurality of operation patterns includes a third operation pattern that skips measurement of the nose position of the designated tool, and
wherein when the result of the second determination processing indicates that the nose position of the designated tool has already been measured, as well as the result of the first determination processing indicates that the designated tool is attached to the designated mounting surface, the controller selects the third operation pattern.

7. The turret lathe according to any one of claims 1 to 6, further comprising a display,
wherein the controller is configured to present an image on the display prompting to mount the designated tool in response to the designated mounting surface having reached the indexed mounting position during execution of the first operation pattern.

8. The turret lathe according to any one of claims 1 to 6, further comprising a display,
wherein a first display command is generated based on the result of the first determination processing, and the display presents a first image indicating whether or not the designated tool is attached to the designated mounting surface in response to receiving the first display command.

9. The turret lathe according to claim 8, wherein the controller displays on the display, an instruction image including an instruction to mount a first tool in response to selection of the first tool before being attached to the designated mounting surface in the first image,
the instruction image including recommended relative position data for the first tool relative to the tool holding unit.

10. The turret lathe according to claim 5 or 6, further comprising a display,
wherein a second display command is generated based on the result of the second determination processing, and the display presents a second image indicating whether or not the nose position of the designated tool has already been measured in response to receiving the second display command.

11. The turret lathe according to claim 10, further comprising a memory configured to store a macro generating program,
wherein the controller is configured to execute the macro generating program stored in the memory in response to selection of a first tool whose nose position has not been measured yet in the second image, and an operation performed to a Generate Macro button, and
wherein the controller is configured to execute the macro generating program stored in the memory to generate a measurement macro to be used to measure the nose position of the first tool.

12. The turret lathe according to claim 11, wherein, when a second tool before being attached to the designated mounting surface is selected in the second image, the measurement macro generated by the controller includes a command for the controller to select the first operation pattern.

13. A tool preparation method comprising:
executing, by a controller, a first determination processing of determining whether or not a designated tool is attached to a designated mounting surface that is one of a plurality of mounting surfaces of a turret;
selecting, by the controller, a specific operation pattern from among a plurality of operation patterns based on a result of the first determination processing; and
sending, by the controller, a control command to a rotation drive unit configured to rotate the turret about a first axis, and to the moving unit configured to move the turret, so that the selected specific operation pattern is executed,
the plurality of operation patterns at least including
a first operation pattern to be executed when a result of the first determination processing indicates that the designated tool is not attached to the designated mounting surface, and
a second operation pattern to be executed when the result of the first determination processing indicates that the designated tool is attached to the designated mounting surface,
the first operation pattern including
rotating the turret about the first axis for the designated mounting surface to be brought to an indexed mounting position before the designated tool is attached to the designated mounting surface,
rotating the turret about the first axis for the designated mounting surface to be brought to an indexed position for tool nose position measurement after the designated tool has been attached to the designated mounting surface, and
measuring a nose position of the designated tool using a measurement unit, the second operation pattern including
rotating the turret about the first axis for the designated mounting surface with the designated tool mounted thereon to be directly brought to the indexed position for tool nose position measurement, and
measuring a nose position of the designated tool using the measurement unit.

14. The tool preparation method according to claim 13,
wherein the designated tool includes a plurality of designated tools including a first designated tool and a second designated tool, and
wherein the controller is configured to
select the first operation pattern as an operation pattern for the first designated tool when the result of the first determination processing indicates that the first designated tool is not attached to a first designated mounting surface,
select the second operation pattern as an operation pattern for the first designated tool when the result of the first determination processing indicates that the first designated tool is attached to the first designated mounting surface,
select the first operation pattern as an operation pattern for the second designated tool when the result of the first determination processing indicates that the second designated tool is not attached to a second designated mounting surface, and
select the second operation pattern as an operation pattern for the second designated tool when the result of the first determination processing indicates that the second designated tool is attached to the second designated mounting surface.

15. The tool preparation method according to claim 13 or 14, wherein selecting the specified operation pattern by the controller includes selecting the specified operation pattern by the controller based on a measurement macro generated based on the result of the first determination processing.
